# EUROPEAN PATENT APPLICATION

(11) **EP 4 826 599 A1**
(43) Date of publication of application: **21.10.2026**
(21) Application number: 26172678.0
(22) Date of filing: 16.04.2026
(51) Int. Cl.: G06N 3/0985

(54) **GENERATION APPARATUS, GENERATION METHOD, AND GENERATION PROGRAM**

(30) Priority: 18.04.2025 JP 2025068587
(71) Applicant: Yokogawa Electric Corporation, Musashino-shi, Tokyo 180-8750 (JP)
(72) Inventor: AKIYOSHI, Ryutaro, Musashino-shi, Tokyo, 180-8750 (JP)
(74) Representative: Hoffmann Eitle

(57) **Abstract**

Provided is a generation apparatus including: a processor; and a computer readable medium which stores a program, in which the processor executes the program to perform receiving evaluation data to be used for evaluating a machine learning model to be generated, generating one or more candidate models that are candidates for a machine learning model to be generated, evaluating each of the one or more candidate models by using the evaluation data, and providing a machine learning model selected from among the one or more candidate models by using an evaluation result.

## Description

### BACKGROUND

### 1. TECHNICAL FIELD

The present invention relates to a generation apparatus, a generation method, and a generation program.

### 2. RELATED ART

Patent Document 1 describes that "as illustrated in Fig. 1, a blockchain lock system 1 for business use which manages space and assets using a key has a configuration in which an unlocking operation of a smart lock apparatus 3 which can be unlocked by wireless communication is performed by a smart device 4, and ledger information of the smart device 4 and an information processing apparatus 5 for providing a service is recorded in a recording apparatus 6 such as a blockchain. Accordingly, the blockchain lock system 1 can perform a smart contract, which is a computer protocol intended for smooth verification, enforcement, execution, and negotiation of a contract, under strong security" (Paragraph 0027 of Patent Document 1).

Patent Document 2 describes that "Business application patents for Internet business patterns, security, IoT equipment, and algorithms are extremely promising as industries that anticipate future potential and contributions to the Fifth Industrial Revolution. The basic claim of this patent consists of the software for securing of memory and multi-thread activation for exceeding a certain number through arraying and listing of these semaphore variables, or the like (Abstract of Patent Document 2).

Patent Document 3 describes that "The present invention relates to a system and a method for detecting an abnormal data file and preventing the detected abnormal data file from being stored in a data storage. In particular, the present system and method divide each data file into a plurality of data blocks to obtain an entropy value for each data block, the information is collated, and then used in a machine learning model to confirm a security level of the data file" (Paragraph 0045 of Patent Document 3).

Patent Document 4 describes that "in S350, the monitoring logic execution unit 270 executes each called monitoring logic to analyze each target image. The monitoring logic execution unit 270 returns an analysis result of each target image by each monitoring logic to the monitoring processing unit 260" (Paragraph 0045 of Patent Document 4) and "in S370, the usage measurement unit 280 measures the execution amount of the monitoring logic by the monitoring logic execution unit 270" (Paragraph 0046 of Patent Document 4).

### RELATED ART DOCUMENTS

### Patent Documents

Patent Document 1: Japanese Patent Application Publication No. 2020-030610
Patent Document 2: Japanese Patent Application Publication No. 2022-184255
Patent Document 3: Japanese Translation Publication of a PCT Route Patent Application No. 2022-522383
Patent Document 4: Japanese Patent Application Publication No. 2022-056176

### GENERAL DISCLOSURE

(1) A generation apparatus according to an aspect of the present disclosure includes: a processor; and a computer readable medium which stores a program, in which the processor executes the program to perform: receiving evaluation data to be used for evaluating a machine learning model to be generated; generating one or more candidate models that are candidates for a machine learning model to be generated; evaluating each of the one or more candidate models by using the evaluation data; and providing a machine learning model selected from among the one or more candidate models by using an evaluation result.
(2) In the above-described generation apparatus according to (1), the processor may execute the program to perform: receiving training data to be used for training a machine learning model to be generated; and generating, in the generating the one or more candidate models, each of the one or more candidate models by training by using the training data.
(3) In the above-described generation apparatus according to (1) or (2), the processor may execute the program to generate, in the generating the one or more candidate models, the one or more candidate models which are different from each other in at least one of a machine learning algorithm, a hyperparameter, pre-processing on input data, or post-processing on output data. (4) In the above-described generation apparatus according to (3), when there is a designation by a user for at least one of a machine learning algorithm, a hyperparameter, pre-processing on input data, or post-processing on output data, the processor may execute the program to determine, in the generating the one or more candidate models, at least one of a machine learning algorithm, a hyperparameter, pre-processing on input data, or post-processing on output data to be applied to the one or more candidate models, according to the designation by the user.
(5) In the above-described generation apparatus according to any one of (1) to (4), the processor may execute the program to perform: receiving metadata indicating at least one of a content, a format, or an acquisition condition of input data, or a content or a format of output data, regarding a machine learning model to be generated; and in generating at least one candidate model of the one or more candidate models, determining, based on the metadata, at least one of a machine learning algorithm, a hyperparameter, pre-processing on input data, or post-processing on output data to be applied to a candidate model.
(6) In the above-described generation apparatus according to (5), the processor may execute the program to perform: adding additional information, which is based on the metadata, to at least one of a machine learning algorithm, a hyperparameter, pre-processing on input data, or post-processing on output data used for generating the machine learning model; and determining, in generating at least one candidate model for generation of a new machine learning model, at least one of a machine learning algorithm, a hyperparameter, pre-processing on input data, or post-processing on output data to be applied to a candidate model, based on a comparison result between the metadata and additional information added to at least one of a machine learning algorithm, a hyperparameter, pre-processing on input data, or post-processing on output data.
(7) In the above-described generation apparatus according to (5) or (6), the processor may execute the program to perform determining, based on the metadata, an evaluation metric to be used for evaluating the one or more candidate models.
(8) In the above-described generation apparatus according to any one of (1) to (7), the processor may execute the program to perform charging processing for generation of the machine learning model.
(9) In the above-described generation apparatus according to any one of (1) to (8), the processor may execute the program to perform allowing a second user to use a machine learning model, which has been generated in response to a request from a first user, in response to a request from the second user.
(10) In the above-described generation apparatus according to (9), the processor may execute the program to perform measuring a usage amount of the machine learning model by the second user.
(11) In the above-described generation apparatus according to (10), the processor may execute the program to perform recording, in a blockchain, the usage amount of the machine learning model by the second user.
(12) In the above-described generation apparatus according to (10) or (11), the processor may execute the program to perform processing of charging a usage fee to the second user according to the usage amount of the machine learning model by the second user.
(13) In the above-described generation apparatus according to any one of (10) to (12), the processor may execute the program to perform processing of paying a usage fee to the first user according to the usage amount of the machine learning model by the second user.
(14) A generation method according to another aspect of the present disclosure includes: receiving, by a computer, evaluation data to be used for evaluating a machine learning model to be generated; generating, by the computer, one or more candidate models that are candidates for a machine learning model to be generated; evaluating, by the computer, each of the one or more candidate models by using the evaluation data; and providing, by the computer, a machine learning model selected from among the one or more candidate models by using an evaluation result.
(15) A generation program according to yet another aspect of the present disclosure causes, when executed by a computer, the computer to perform operations including: receiving evaluation data to be used for evaluating a machine learning model to be generated; generating one or more candidate models that are candidates for a machine learning model to be generated; evaluating each of the one or more candidate models by using the evaluation data; and providing a machine learning model selected from among the one or more candidate models by using an evaluation result.

The summary clause does not describe all necessary features of the present invention. The present invention may also be a sub-combination of the features described above.

### BRIEF DESCRIPTION OF THE DRAWINGS

Fig. 1 illustrates a conceptual diagram of a system 10 according to the present embodiment.
Fig. 2 illustrates a configuration of a generation apparatus 100 according to the present embodiment.
Fig. 3 illustrates a flow of user authentication by the generation apparatus 100 according to the present embodiment.
Fig. 4 illustrates a registration flow of a machine learning algorithm by the generation apparatus 100 according to the present embodiment.
Fig. 5 illustrates an example of an algorithm DB 500 stored in a generation DB 215 according to the present embodiment.
Fig. 6 illustrates an example of a pre-processing DB 600 stored in the generation DB 215 according to the present embodiment.
Fig. 7 illustrates an example of a post-processing DB 700 stored in the generation DB 215 according to the present embodiment.
Fig. 8 illustrates an example of an evaluation metric DB 800 stored in the generation DB 215 according to the present embodiment.
Fig. 9 illustrates a flow (first half) of generation of the machine learning model by the generation apparatus 100 according to the present embodiment.
Fig. 10 illustrates a flow (second half) of the generation of the machine learning model by the generation apparatus 100 according to the present embodiment.
Fig. 11 illustrates an example of a model DB 1100 stored in a model DB 255 according to the present embodiment.
Fig. 12 illustrates a flow of use of the machine learning model by the generation apparatus 100 according to the present embodiment.
Fig. 13 illustrates a flow of distribution by the generation apparatus 100 according to the present embodiment.
Fig. 14 illustrates an example of a computer 2200 in which a plurality of aspects of the present invention may be embodied in whole or in part.

### DESCRIPTION OF EXEMPLARY EMBODIMENTS

The following embodiments do not limit the invention according to the claims. Not all combinations of features described in the embodiments are necessarily essential for a solution of the invention.

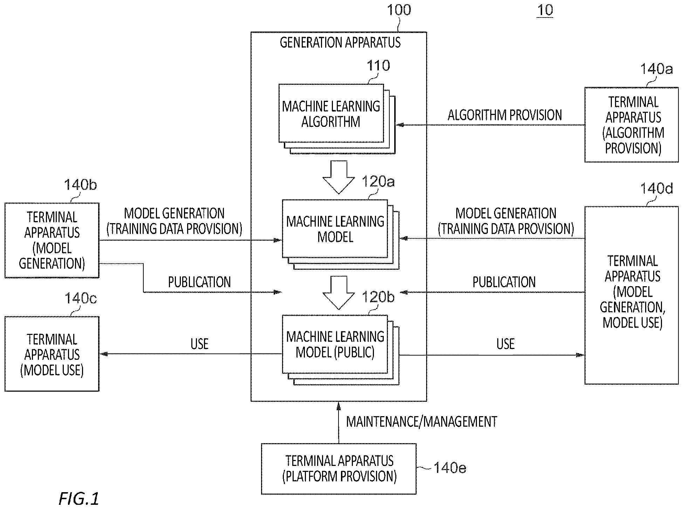

Fig. 1 illustrates a conceptual diagram of a system 10 according to the present embodiment. The system 10 includes a generation apparatus 100 and one or more terminal apparatuses 140a to 140e (also referred to as a "terminal apparatus 140"). The generation apparatus 100 provides a platform that enables various users, who access the generation apparatus 100 by using one or more terminal apparatuses 140, to generate, use, and distribute a machine learning model 120. The generation apparatus 100 may provide the machine learning model 120 used in various technical fields, or may provide the machine learning model 120 used in a specific technical field. For example, the generation apparatus 100 may provide the machine learning model 120 for identifying a state of a cell by using an image of the cell that can be acquired non-invasively or biological data that can be acquired in addition to the image.

The generation apparatus 100 may be a computer such as a personal computer (PC), a tablet computer, a smartphone, a workstation, a server computer, or a general-purpose computer, or may be a computer system in which a plurality of computers are connected. Such a computer system is also a computer in a broad sense. In addition, the generation apparatus 100 may be implemented by one or more virtual computer environments executable in a computer. Alternatively, the generation apparatus 100 may be a dedicated computer designed for generation and use of the machine learning model 120, or may be dedicated hardware implemented by a dedicated circuit. The generation apparatus 100 may be a cloud server that provides a cloud service available through one or more terminal apparatuses 140 via a network such as the Internet.

Similarly, the terminal apparatus 140 may be a computer such as a personal computer (PC), a tablet computer, a smartphone, a workstation, a server computer, or a general-purpose computer, or may be a computer system in which a plurality of computers are connected. In addition, the terminal apparatus 140 may be implemented by one or more virtual computer environments executable in a computer. Alternatively, the terminal apparatus 140 may be a dedicated computer designed for use of a service provided by the generation apparatus 100, or may be dedicated hardware implemented by a dedicated circuit.

The generation apparatus 100 has one or more machine learning algorithms 110. The generation apparatus 100 may receive provision of at least one machine learning algorithm 110 from the terminal apparatus 140 (for example, the terminal apparatus 140a) used by a user, such as a vendor, who develops and provides the machine learning algorithm 110.

The generation apparatus 100 generates the machine learning model 120 in response to a request from the terminal apparatus 140 (for example, the terminal apparatus 140b, the terminal apparatus 140d) used by the user who desires to generate the machine learning model 120. The generation apparatus 100 trains the machine learning model 120 by using at least one of the available machine learning algorithms 110 and using training data provided from the terminal apparatus 140, thereby generating the trained machine learning model 120. Accordingly, in a field where various users intend to use machine learning, the generation apparatus 100 can provide the machine learning model 120 trained so as to output output data included in the training data when input data included in the training data is input.

The generation apparatus 100 may enable the generated machine learning model 120 to be used only by the user who has instructed generation of the machine learning model 120 (in the figure, the machine learning model 120a). Alternatively, the generation apparatus 100 may allow a second user to use the machine learning model 120, which has been generated in response to a request from a first user, in response to a request from the second user (in the figure, the machine learning model 120b). For example, the generation apparatus 100 may switch the private machine learning model 120a to the public machine learning model 120b in response to receiving, from the first user, an instruction to publish the machine learning model 120a, which has been generated in response to a request from the first user, to another user.

In response to a request from the terminal apparatus 140 (for example, the terminal apparatus 140c, the terminal apparatus 140d) used by the user who desires to use the published machine learning model 120b, the generation apparatus 100 may allow the user to use the machine learning model 120b. In addition, in response to a request from the user who has requested generation of the private machine learning model 120a, the generation apparatus 100 may allow the user to use the machine learning model 120a.

The generation apparatus 100 may perform processing related to maintenance, management, and the like of the generation apparatus 100 in response to an operation from the terminal apparatus 140e used by an administrator or the like in charge of maintenance, management, and the like of the generation apparatus 100.

The generation apparatus 100 may provide each terminal apparatus 140 with an individual service of registration of the machine learning algorithm 110, generation and publication of the machine learning model 120, or use of the machine learning model 120, or any combination of services. In the example of this figure, the terminal apparatus 140a provides the machine learning algorithm 110 to the generation apparatus 100, the terminal apparatus 140b requests the generation apparatus 100 to generate and publish the machine learning model 120, and the terminal apparatus 140c requests the generation apparatus 100 to use the machine learning model 120. On the other hand, the terminal apparatus 140d requests the generation apparatus 100 to both generate and publish the machine learning model 120 and use the machine learning model 120. In this manner, the user who has requested generation of the machine learning model 120 and the user who requests use of the machine learning model 120 may be the same or different. Similarly, at least two users among the user who has provided the machine learning algorithm 110, the user who has requested generation of the machine learning model 120, and the user who requests use of the machine learning model 120 may be the same.

Note that this figure illustrates an example in which the generation apparatus 100 is connected to five terminal apparatuses 140, that is, the terminal apparatuses 140a to 140e for convenience of description. Alternatively, the generation apparatus 100 may be connected to any number of terminal apparatuses 140, and, in response to a request of a user who uses each terminal apparatus 140, may provide a service related to one or any combination of registration of the machine learning algorithm 110, generation and publication of the machine learning model 120, and use of the machine learning model 120 as described above.

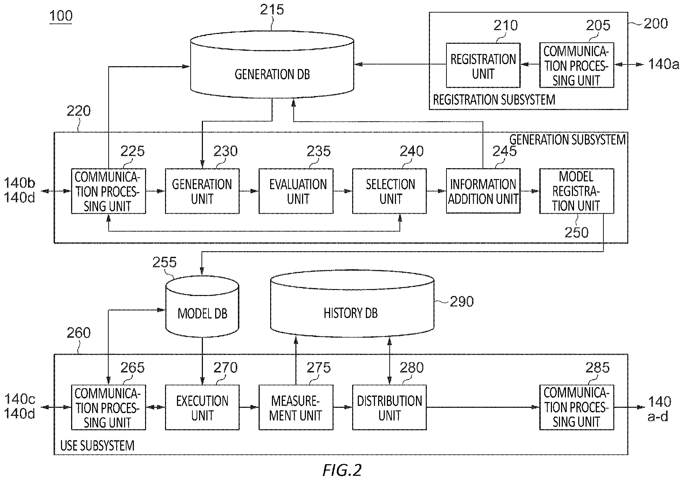

Fig. 2 illustrates a configuration of the generation apparatus 100 according to the present embodiment. The generation apparatus 100 includes a registration subsystem 200, a generation DB 215 (generation database 215), a generation subsystem 220, a model DB 255 (model database 255), a use subsystem 260, and a history DB 290 (history database 290).

The registration subsystem 200 is communicably connected to one or more terminal apparatuses 140 (for example, the terminal apparatus 140a) illustrated in Fig. 1, and is responsible for processing of receiving provision of the machine learning algorithm 110 from the connected terminal apparatus 140 and registering the machine learning algorithm 110 in the generation apparatus 100. The registration subsystem 200 includes a communication processing unit 205 and a registration unit 210.

The communication processing unit 205 is communicably connected to one or more terminal apparatuses 140, and receives the machine learning algorithm 110 from the connected terminal apparatus 140 (for example, the terminal apparatus 140a). When the generation apparatus 100 provides a cloud service, the communication processing unit 205 receives the machine learning algorithm 110 uploaded from the connected terminal apparatus 140. The terminal apparatus 140 may receive the machine learning algorithm 110 in a form of source code, object code, or an executable format file, or another format.

The registration unit 210 is connected to the communication processing unit 205 so as to be able to transmit and receive data. The registration unit 210 registers the machine learning algorithm 110 by storing the machine learning algorithm 110 received by the communication processing unit 205 in the generation DB 215.

The generation DB 215 is a storage apparatus such as a memory or a hard disk drive built in or connected to a computer or the like functioning as the generation apparatus 100. Alternatively, the generation DB 215 may be a network storage, a cloud storage, or the like connected to the generation apparatus 100 via a network such as the Internet. The generation apparatus 100 stores various types of data used for generating the machine learning model 120. The generation DB 215 receives and stores the machine learning algorithm 110 from the registration unit 210 in the registration subsystem 200.

The generation subsystem 220 is communicably connected to one or more terminal apparatuses 140 (for example, the terminal apparatus 140b, the terminal apparatus 140d) illustrated in Fig. 1, and is responsible for processing of generating the machine learning model 120 in response to a request from the connected terminal apparatus 140 and registering the machine learning model 120 in the generation apparatus 100. The generation subsystem 220 includes a communication processing unit 225, a generation unit 230, an evaluation unit 235, a selection unit 240, an information addition unit 245, and a model registration unit 250.

The communication processing unit 225 is communicably connected to one or more terminal apparatuses 140. The communication processing unit 225 receives a generation request for the machine learning model 120 from the terminal apparatus 140 (for example, the terminal apparatus 140b, the terminal apparatus 140d) used by the user who intends to generate the machine learning model 120 by using the generation apparatus 100. The communication processing unit 225 may receive, from the terminal apparatus 140, at least one of training data used for training the machine learning model 120 to be generated or evaluation data used for evaluating the machine learning model 120 to be generated, accompanying the generation request.

The training data and the evaluation data may include one or more sets of training input data to be input to the machine learning model 120 and training output data to be output by the machine learning model 120 in response to input of the training input data to the machine learning model 120 (that is, output data that is a correct answer for the input data). Note that the communication processing unit 225 may receive both training data in a narrow sense and evaluation data by receiving, from the terminal apparatus 140, training data in a broad sense that is not divided in advance into training data (in a narrow sense) used for training the machine learning model 120 and evaluation data used for evaluating the machine learning model 120.

The communication processing unit 225 may receive metadata regarding the machine learning model 120 to be generated. The metadata regarding the machine learning model 120 may include various types of information designated or input by the user who requests generation of the machine learning model 120. The metadata regarding the machine learning model 120 may be, for example, information indicating at least one of a content, a format, or an acquisition condition of input data input by the machine learning model 120, a content or a format of output data output by the machine learning model 120, or an application destination such as a technical field to which the machine learning model 120 is applied. The metadata may include any information such as other auxiliary information regarding the machine learning model 120.

The generation unit 230 is connected to the generation DB 215 and the communication processing unit 225 so as to be able to transmit and receive data. In response to receiving the generation request for the machine learning model 120 from the communication processing unit 225, the generation unit 230 generates one or more candidate models that are candidates for the machine learning model 120 to be generated. In generating one or more candidate models, the generation unit 230 may generate each of the one or more candidate models by training by using the training data received from the communication processing unit 225.

Here, a "candidate model" is a machine learning model generated as a candidate for the machine learning model 120 in a process of generating the machine learning model 120 in response to a request from the user. The "candidate model" is generated by training by using the training data, evaluated using the evaluation data, and selected based on an evaluation result. The selected "candidate model" is used as the machine learning model 120 that is generated finally.

In generating the one or more candidate models, the generation unit 230 may generate the one or more candidate models which are different from each other in at least one of the machine learning algorithm 110, a hyperparameter, pre-processing on the input data, or post-processing on the output data. The generation unit 230 may select the machine learning algorithm 110, the pre-processing, or the post-processing to be applied to the candidate model from among one or more machine learning algorithms 110, one or more types of pre-processing, and one or more types of post-processing stored in the generation DB 215, and apply it to the candidate model. The generation unit 230 may determine at least one of the machine learning algorithm, the hyperparameter, the pre-processing on the input data, or the post-processing on the output data to be applied to the candidate model, based on the metadata added to the machine learning model 120 to be generated.

The evaluation unit 235 is connected to the generation unit 230 so as to be able to transmit and receive data. The evaluation unit 235 evaluates each of one or more candidate models generated by the generation unit 230 in response to the generation request for the machine learning model 120, by using the evaluation data accompanying the generation request.

The selection unit 240 is connected to the communication processing unit 225 and the evaluation unit 235 so as to be able to transmit and receive data. The selection unit 240 selects the machine learning model 120 to be provided in response to the generation request, by using evaluation results from among one or more candidate models.

The information addition unit 245 is connected to the generation DB 215 and the selection unit 240 so as to be able to transmit and receive data. The information addition unit 245 adds additional information, which is based on the metadata accompanying the generation request, to at least one of the machine learning algorithm 110, the hyperparameter, the pre-processing on the input data, or the post-processing on the output data used for generating the machine learning model 120 in response to the generation request (that is, generating the machine learning model 120 selected by the selection unit 240). The information addition unit 245 may add, as the additional information, at least partial information of the metadata accompanying the generation request, to at least one piece of metadata of the machine learning algorithm 110, the pre-processing, or the post-processing stored in the generation DB 215.

Accordingly, in generating at least one candidate model for generation of a new machine learning model 120 in response to a new generation request, the generation unit 230 in the generation apparatus 100 can determine at least one of the machine learning algorithm 110, the hyperparameter, the pre-processing on the input data, or the post-processing on the output data to be applied to the candidate model, based on a comparison result between the metadata added to the new generation request and the additional information added to at least one of the machine learning algorithm 110, the hyperparameter, the pre-processing on the input data, or the post-processing on the output data. As a result, the generation unit 230 can select the machine learning algorithm 110, the pre-processing, or the post-processing having higher relevance with the metadata added to the machine learning model 120 to be newly generated, and it is possible to reduce an amount of computation or a computation time by reducing trial and error required to generate an optimal machine learning model 120. Note that the generation apparatus 100 may not include the information addition unit 245 when selection of the machine learning algorithm 110, the pre-processing, and the post-processing using the metadata is not performed.

The model registration unit 250 is connected to the information addition unit 245 so as to be able to transmit and receive data. The model registration unit 250 makes the machine learning model 120 generated in response to the generation request (that is, the machine learning model 120 selected by the selection unit 240) available for provision by registering the machine learning model 120 in the model DB 255. The model registration unit 250 may store at least a part of the metadata accompanying the generation request in the machine learning model 120 in association with the machine learning model 120.

The model DB 255 is a storage apparatus such as a memory or a hard disk drive built in or connected to a computer or the like functioning as the generation apparatus 100. Alternatively, the model DB 255 may be a network storage, a cloud storage, or the like connected to the generation apparatus 100 via a network such as the Internet. The model DB 255 stores one or more machine learning models 120 that are generated.

The use subsystem 260 is communicably connected to one or more terminal apparatuses 140 (for example, the terminal apparatus 140c, the terminal apparatus 140d) illustrated in Fig. 1, and is responsible for processing of providing the generated machine learning model 120 in response to a request from the connected terminal apparatus 140. The use subsystem 260 includes a communication processing unit 265, an execution unit 270, a measurement unit 275, a distribution unit 280, and a communication processing unit 285.

The communication processing unit 265 is communicably connected to one or more terminal apparatuses 140. The communication processing unit 265 receives a use request from a terminal apparatus 140 (for example, the terminal apparatus 140c, the terminal apparatus 140d) used by a user who intends to use the machine learning model 120 registered in the generation apparatus 100. The communication processing unit 265 performs various types of communication between the terminal apparatus 140 and the generation apparatus 100 associated with use of the machine learning model 120.

The execution unit 270 is connected to the model DB 255 and the communication processing unit 265 so as to be able to transmit and receive data. The execution unit 270 executes the machine learning model 120 designated by the use request from among one or more machine learning models 120 stored in the model DB 255. The execution unit 270 inputs analysis target data accompanying the use request to the designated machine learning model 120, and provides data of an analysis result output by the machine learning model 120 to the terminal apparatus 140 via the communication processing unit 265.

The measurement unit 275 is connected to the execution unit 270 so as to be able to transmit and receive data. The measurement unit 275 measures a usage amount of each machine learning model 120 by each user. The measurement unit 275 may store an execution history of each machine learning model 120 by each user in the history DB 290.

The distribution unit 280 is connected to the measurement unit 275 and the history DB 290 so as to be able to transmit and receive data. The distribution unit 280 refers to the execution history of each machine learning model 120 stored in the history DB 290. The distribution unit 280 may perform processing of charging a usage fee to each user according to the usage amount of the machine learning model 120 by each user. Here, the distribution unit 280 may charge a usage fee in response to use of the machine learning model 120 by a user (for example, a "second user"), who is different from the user (for example, the "first user") who has generated the machine learning model 120. The distribution unit 280 may perform processing of paying the usage fee to the user (for example, the "first user") who has generated the machine learning model 120, according to the usage amount of the machine learning model by another user (for example, the "second user").

The communication processing unit 285 is connected to the distribution unit 280 so as to be able to transmit and receive data. The communication processing unit 285 is connected to the terminal apparatus 140 used by each user, transmits charging and transfer transactions for the usage fee of the machine learning model 120 to the terminal apparatus 140 used by the corresponding user, in response to a request from the distribution unit 280, and causes the transactions to be executed. For the user who gives and receives the usage fee through a financial institution, a credit card company, or the like, the communication processing unit 285 may transmit a charging or transfer transaction for the usage amount to a server apparatus or the like of the financial institution, the credit card company, or the like used by the user.

The history DB 290 is connected to the measurement unit 275 and the distribution unit 280 so as to be able to transmit and receive data. The history DB 290 is a storage apparatus such as a memory or a hard disk drive built in or connected to a computer or the like functioning as the generation apparatus 100. Alternatively, the history DB 290 may be a network storage, a cloud storage, or the like connected to the generation apparatus 100 via a network such as the Internet. The history DB 290 records an execution history of each machine learning model 120 by each user.

In the generation apparatus 100 according to the present embodiment, the communication processing unit 205, the communication processing unit 225, the communication processing unit 265, and the communication processing unit 285 are described as separate components for convenience of description. Alternatively, two or more of the communication processing unit 205, the communication processing unit 225, the communication processing unit 265, and the communication processing unit 285 may perform communication processing allocated to each communication processing unit by using common communication hardware.

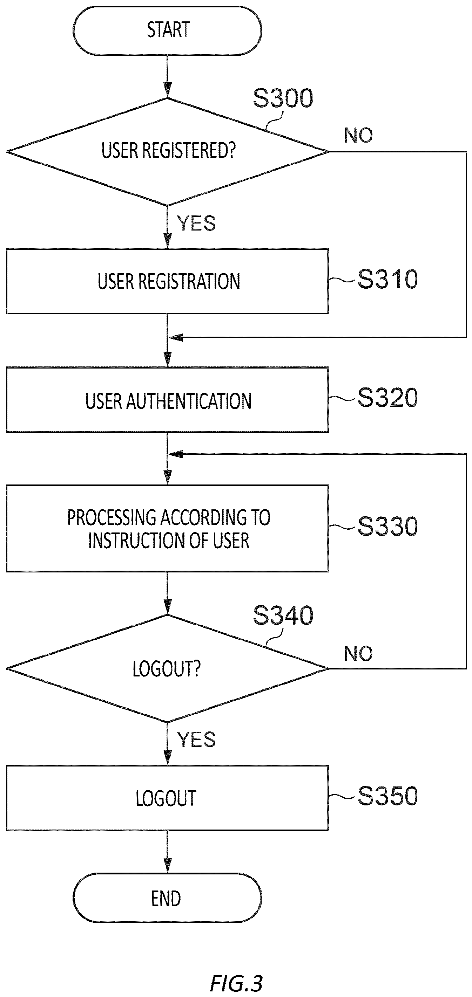

Fig. 3 illustrates a flow of user authentication by the generation apparatus 100 according to the present embodiment. The generation apparatus 100 may enable the user of each terminal apparatus 140 to log in to the service provided by the generation apparatus 100, and may provide the service of the generation apparatus 100 to the logged-in user.

In step 300 (S300), the generation apparatus 100 determines whether or not a user who has accessed the generation apparatus 100 by using the terminal apparatus 140 is registered in the generation apparatus 100. As an example, the generation apparatus 100 may perform processing of causing the terminal apparatus 140 to display a screen for performing login to the generation apparatus 100 and new registration of an account, and, in response to an instruction for the new registration by the user on the screen, determine that the user is to be newly registered. If the new registration of the user is not performed ("NO" in S300), the generation apparatus 100 advances the processing to S320. If the new registration of the user is performed ("YES" in S300), the generation apparatus 100 advances the processing to S310.

In S310, the generation apparatus 100 newly registers the user and creates an account for the user. The generation apparatus 100 performs processing of causing the terminal apparatus 140 to display a screen for the registration of the user, and in response to input of basic information (for example, a name, contact information, identity verification, a password used for user authentication, and the like) by the user on the screen, creates an account of the user and associates the basic information with the account. The generation apparatus 100 encrypts and stores data used for user authentication by using a hash function (for example, SHA-256, SHA-3) or a public key cryptosystem. The generation apparatus 100 may record the data used for user authentication in a distributed ledger utilizing a blockchain technology (for example, Ethereum, Hyperledger Fabric) after encrypting the data.

In S320, the generation apparatus 100 receives a login request to the account of the user via the terminal apparatus 140, and authenticates the user. As an example, the generation apparatus 100 may perform identity verification by using an authentication method such as password authentication, two-factor authentication (2FA), multi-factor authentication (MFA), a security question, a hardware token, a software token, electronic certificate authentication, social login, biometric authentication, or a combination of two or more thereof.

If the user authentication is successful, in S330, the generation apparatus 100 provides the user with a login environment in which the generation apparatus 100 can be used. The generation apparatus 100 may provide an environment in which the user can access a dedicated dashboard via the terminal apparatus 140. The generation apparatus 100 performs processing such as registration of the machine learning algorithm 110 and generation and use of the machine learning model 120 according to an instruction of the logged-in user. The generation apparatus 100 may add or change the basic information of the user according to an instruction of the user. The generation apparatus 100 may enable selection and setting of one authentication method or two or more authentication methods used for account authentication according to a security requirement requested by the user.

In S340, the generation apparatus 100 determines whether or not the user has instructed logout. If the user has not instructed logout ("NO" in S340), the generation apparatus 100 advances the processing to S330 and continues the processing according to an instruction of the user. If the user has instructed logout ("YES" in S340), the generation apparatus 100 causes the account used by the user to transition to a logged-out state.

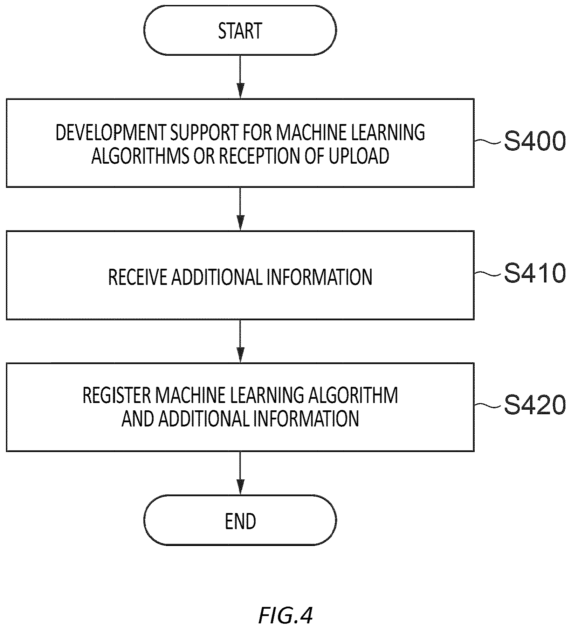

Fig. 4 illustrates a registration flow of a machine learning algorithm by the generation apparatus 100 according to the present embodiment. As a type of the processing in S330 of Fig. 3, the generation apparatus 100 performs processing of registering the machine learning algorithm 110 provided by the user according to an instruction from the user.

In S400, the communication processing unit 205 in the generation apparatus 100 receives the machine learning algorithm 110 developed or generated by the user via the terminal apparatus 140. The communication processing unit 205 may receive upload of the machine learning algorithm 110 in the login environment. The communication processing unit 205 sends the received machine learning algorithm 110 to the registration unit 210.

The registration subsystem 200 in the generation apparatus 100 may provide the user with a development environment for the machine learning algorithm 110. The registration subsystem 200 may provide a development environment that includes program input, program testing (step execution, breakpoint setting, or the like), displaying an internal state during testing, and the like, so that the user can perform programming, testing, and debugging of the machine learning algorithms 110.

In S410, the communication processing unit 205 receives, via the terminal apparatus 140, additional information to be added to the developed or received machine learning algorithm 110. As an example, the additional information may be at least one of a model name, a creation date, an application scope (for example, to what processing the machine learning algorithm can be applied), performance metrics, version information, or a dependent library. In addition, the additional information may be at least one of a content, a format, or acquisition conditions of the input data, or a content or a format of the output data.

The additional information indicating the content and format of the input data or output data indicates information indicating the type of the input data/output data such as an image, a moving image, a text, an audio, or the like, or a format of the input data or output data such as a size of an input image being 256 bits × 256 bits, what value a first data value of the output data indicates, or what value a second data value indicates. The acquisition conditions of the input data indicate, for example, equipment that has captured an image, an imaging time, a magnification, or another imaging condition, an imaging environment such as whether or not a subject is stained, or other various conditions related to acquisition of the input data.

The registration subsystem 200 may cause the user to select additional information for each of a plurality of items from among two or more options, or may cause the user to input the additional information in a natural language. The registration subsystem 200 may cause the user to input the additional information without dividing the additional information into a plurality of items. In S420, the registration unit 210 registers, in the generation DB 215, the machine learning algorithm 110 to be registered and the additional information on the machine learning algorithm 110.

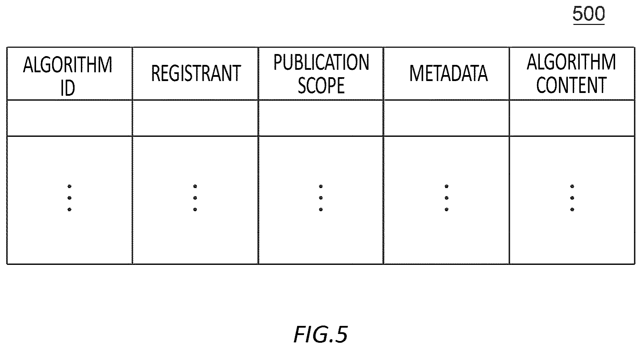

Fig. 5 illustrates an example of the algorithm DB 500 stored in the generation DB 215 according to the present embodiment. The algorithm DB 500 stores "algorithm ID", "registrant", "publication scope", "metadata", and "algorithm content" for each of one or more machine learning algorithms 110 registered in the generation apparatus 100.

The "algorithm ID" is an identifier for identifying each machine learning algorithm 110 in the system 10 or the generation apparatus 100. The registration unit 210 may assign a unique identifier to each machine learning algorithm 110. Alternatively, the registration unit 210 may use, as the "algorithm ID", a name or the like of the machine learning algorithm 110 input by the user. The "registrant" is user identification information such as a user name (account name) or a user number (account number) for identifying the user who has registered the machine learning algorithm 110. In the present embodiment, the "user", the "registrant", or the like is not limited to an individual, and may be a corporation, an association, or the like. At least one machine learning algorithm 110 may be provided by a platform provider of the system 10 or an account associated with the platform provider.

The "publication scope" indicates a publication scope in which the machine learning algorithm 110 is published. The registration unit 210 sets the "publication scope" so as to publish the machine learning algorithm 110 to a scope designated by the user who registers the machine learning algorithm 110. The "publication scope" may be able to designate whether to enable use only of the user who has registered the machine learning algorithm 110 or to publish the machine learning algorithm 110 to another user. The "publication scope" may be access right information that enables more detailed setting of an access right. As an example, the "publication scope" may be access right information used for an access control list (ACL), roll-based access control (RBAC), attribute-based access control (ABAC), or another access restriction method. The "publication scope" may be access right information that enables, for a specific user or user group, individual setting of one permission or two or more permissions such as browsing, executing, editing/modifying, or sharing the machine learning algorithm 110.

The "metadata" stores the additional information added to the machine learning algorithm 110 as the metadata related to the machine learning algorithm 110. The "algorithm content" may store the content of the machine learning algorithm 110 in a form of source code, object code, or an executable format file, or in another format. The "algorithm content" may store a directory in which an entity of the machine learning algorithm 110 is stored and a file name of the entity of the machine learning algorithm 110, or a reference to the entity of the machine learning algorithm 110, such as a link or URL pointing to the entity of the machine learning algorithm 110.

As an example, the machine learning algorithm 110 may use a convolutional neural network (CNN), a deep neural network (DNN), a recurrent neural network (RNN), a transformer, a support vector machine (SVM), a random forest, or another machine learning method. The machine learning algorithm 110 may also be implemented using one machine learning method or two or more machine learning methods.

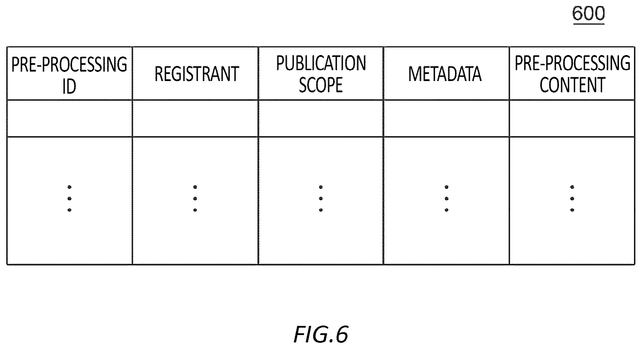

Fig. 6 illustrates an example of a pre-processing DB 600 stored in the generation DB 215 according to the present embodiment. The pre-processing DB 600 stores one or more types of pre-processing that can be applied to input data input to the machine learning algorithm 110. The pre-processing DB 600 stores "pre-processing ID", "registrant", "publication scope", "metadata", and "pre-processing content" for each of one or more types of pre-processing registered in the generation apparatus 100.

The "pre-processing ID" is an identifier for identifying each pre-processing in the system 10 or the generation apparatus 100. The "pre-processing ID" is similar to the "algorithm ID" in Fig. 5 except that it relates to the pre-processing.

The "registrant" is user identification information such as a user name (account name) or a user number (account number) for identifying the user who has registered the pre-processing. At least one pre-processing may be provided by the platform provider of the system 10 or the account associated with the platform provider. When registration of the pre-processing is received from an outside, the registration subsystem 200 may perform processing of registering the pre-processing in the pre-processing DB 600, similarly to the processing of registering the machine learning algorithm 110 in the algorithm DB 500.

The "publication scope" indicates a publication scope in which the pre-processing is published. The "publication scope" is similar to the "publication scope" in Fig. 5 except that it relates to the pre-processing.

The "metadata" stores the additional information added to the pre-processing as the metadata related to the pre-processing. The "metadata" is similar to the "metadata" of Fig. 5 except that it relates to the pre-processing.

The "pre-processing content" may store the pre-processing content in a form of source code, object code, or an executable format file, or in another format. The "pre-processing content" is similar to the "algorithm content" in Fig. 5 except that it relates to the pre-processing.

The pre-processing may be used to perform adjustment, transformation, or the like of image data before the image data is input to the machine learning algorithm 110. In a case involving analysis of a cell image, analysis target cell image data may be, as an example, a Bright-field image, a fluorescence image, an electron microscope image, or a confocal microscope image. Examples of the pre-processing on the image data include those described below.

### • Image correction

Pre-processing for correcting non-uniformity of light illuminance of image data, pre-processing for adjusting balance between brightness and darkness of image data, and the like.

### • Noise removal

Pre-processing for reducing image noise using a Gaussian filter, a median filter, or another filter, and the like.

### • Resolution adjustment

Pre-processing for unifying an image size or adapting to the machine learning algorithm 110 by resizing, re-sampling or the like, and the like.

### • Segmentation

A pre-processing algorithm for automatically extracting a cell region (such as an Otsu's method, a watershed method, or a deep-learning based segmentation) in the machine learning algorithm 110 targeting a cell image.

### • Feature amount extraction

Pre-processing for quantifying a feature such as a shape, texture, or brightness of an object.

In a case involving analysis of biological data of a cell, analysis target biological data may be, as an example, gene expression data (such as qPCR data or RNA-Seq data), protein expression data (such as immunostaining data or flow cytometry (FCM) data), a metabolite profile, efficacy of cellular medicine, or the like. Examples of the pre-processing for biological data include those shown below.

### • Data Normalization

Pre-processing for normalizing gene expression data or other data (such as Transcripts per Million (TPM), Reads Per Kilobase of exon per Million mapped reads (RPKM), or Fragments Per Kilobase of exon per Million mapped reads (FPKM)).

### • Batch effect correction

Pre-processing for correcting a difference between different experimental conditions and apparatuses (such as ComBat or Harmony).

### • Missing value imputation

Pre-processing for estimating missing data using a machine learning algorithm (such as k-nearest neighbors or matrix completion).

### • Noise filtering

Pre-processing for removing a low-confidence data point (such as a data point separated from an average or a reference value by a threshold or more).

### • Data transformation

Pre-processing of adjusting a distribution of data by using log transformation, box-cox transformation, or the like.

### • Feature amount selection

Pre-processing for selecting a feature amount determined to be relatively important by using principal component analysis (PCA), correlation analysis, information gain, or the like.

### • Dimensionality reduction

Pre-processing for compressing high dimensional data to a lower dimension (example: t-SNE, UMAP).

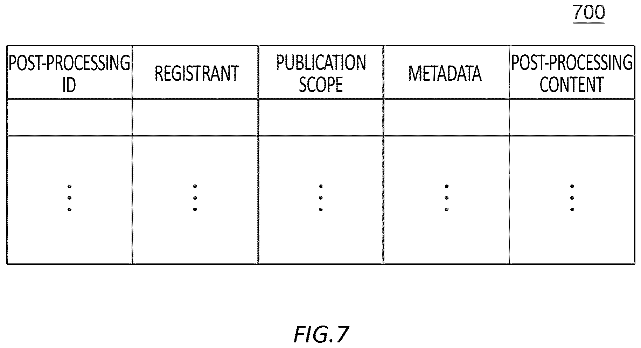

Fig. 7 illustrates an example of a post-processing DB 700 stored in the generation DB 215 according to the present embodiment. The post-processing DB 700 stores one or more types of post-processing that can be applied to output data output from the machine learning algorithm 110. The post-processing DB 700 stores "post-processing ID", " registrant", "publication scope", "metadata", and "post-processing content" for each of one or more types of post-processing registered in the generation apparatus 100.

The "post-processing ID" is an identifier for identifying each post-processing in the system 10 or the generation apparatus 100. The "post-processing ID" is similar to the "algorithm ID" in Fig. 5 except that it relates to the post-processing.

The "registrant" is user identification information such as a user name (account name) or a user number (account number) for identifying the user who has registered the post-processing. At least one post-processing may be provided by the platform provider of the system 10 or the account associated with the platform provider. When registration of the post-processing is received from the outside, the registration subsystem 200 may perform processing of registering the post-processing in the post-processing DB 700, similarly to the processing of registering the machine learning algorithm 110 in the algorithm DB 500.

The "publication scope" indicates a publication scope in which the post-processing is published. The "publication scope" is similar to the "publication scope" in Fig. 5 except that it relates to the post-processing.

The "metadata" stores the additional information added to the post-processing as the metadata related to the post-processing. The "metadata" is similar to the "metadata" in Fig. 5 except that it relates to the post-processing.

The "post-processing content" may store the post-processing content in a form of source code, object code, or an executable format file, or in another format. The "post-processing content" is similar to the "algorithm content" in Fig. 5 except that it relates to the post-processing. Examples of the post-processing include data normalization, data transformation, and the like.

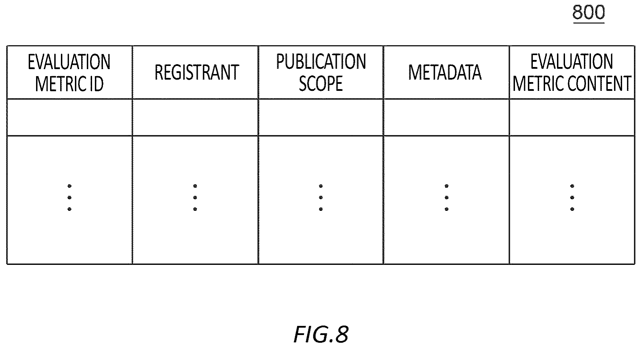

Fig. 8 illustrates an example of an evaluation metric DB 800 stored in the generation DB 215 according to the present embodiment. The evaluation metric DB 800 stores one or more evaluation metrics used by the evaluation unit 235 to evaluate the generated machine learning model 120. The evaluation metric DB 800 stores "evaluation metric ID", "registrant", "publication scope", "metadata", and "evaluation metric content" for each of one or more evaluation metrics.

The "evaluation metric ID" is an identifier for identifying each evaluation metric in the system 10 or the generation apparatus 100. The "evaluation metric ID" is similar to the "algorithm ID" in Fig. 5 except that it relates to the evaluation metric.

The "registrant" is user identification information such as a user name (account name) or a user number (account number) for identifying the user who has registered the evaluation metric. At least one evaluation metric may be provided by the platform provider of the system 10 or the account associated with the platform provider. When registration of the evaluation metric is received from the outside, the registration subsystem 200 may perform processing of registering the evaluation metric in the evaluation metric DB 800, similarly to the processing of registering the machine learning algorithm 110 in the algorithm DB 500. The generation subsystem 220 may receive, accompanying the generation request for the machine learning model 120, an evaluation metric used for evaluating a candidate model that is a candidate for the machine learning model 120 to be generated, from the terminal apparatus 140 (the terminal apparatus 140b, the terminal apparatus 140d, or the like) of the user. In this case, the communication processing unit 225 in the generation subsystem 220 that has received the evaluation metric may register the received evaluation metric in the evaluation metric DB 800.

The "publication scope" indicates a publication scope in which the evaluation metric is published. The "publication scope" is similar to the "publication scope" in Fig. 5 except that it relates to the evaluation metric.

The "metadata" stores the additional information added to the evaluation metric as the metadata related to the evaluation metric. The "metadata" is similar to the "metadata" of Fig. 5 except that it relates to the evaluation metric.

The "evaluation metric content" may store the evaluation metric content in a form of a calculation formula of the evaluation metric, source code, object code, or an executable format file, or in another format. The "evaluation metric content" is similar to the "algorithm content" in Fig. 5 except that it relates to the evaluation metric.

As an example, the evaluation metric may be represented by a function or the like determined such that the larger an error between output data, which is output from the candidate model in response to input of the input data in the evaluation data to the candidate model generated by the generation unit 230, and output data (target value), which is associated with the input data in the evaluation data, the lower the evaluation value. As an example, the evaluation metric of the candidate model may be a correlation coefficient between the output data of the candidate model and the target value, accuracy of the output data of the candidate model, recall (a ratio of evaluation data predicted as positive among evaluation data having positive target values), F-score, a receiver operating characteristic (ROC) curve, a mean absolute error (MAE) or a mean squared error (MSE) between the output data of the candidate model and the target value, or a combination of two or more thereof (such as a weighted sum).

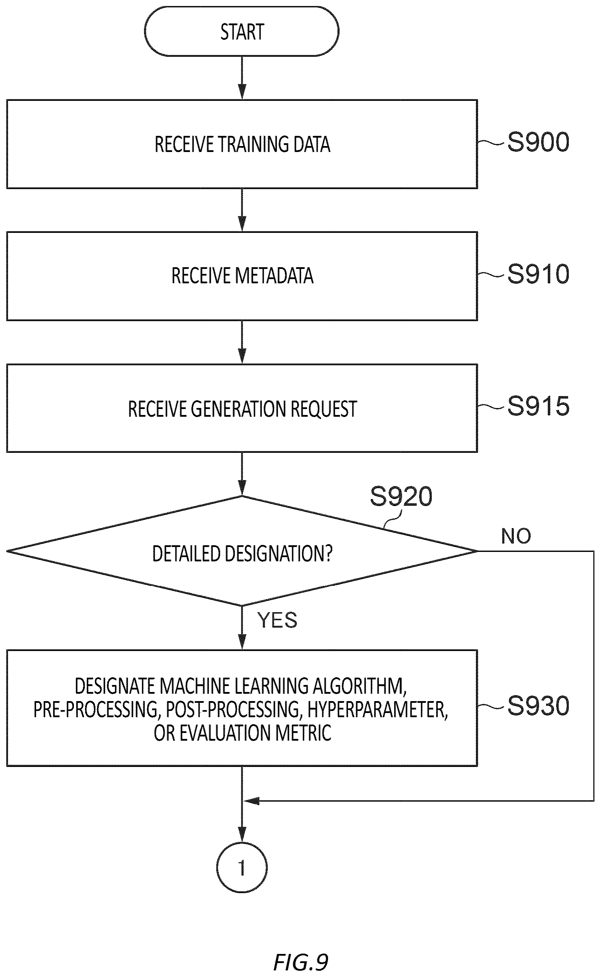

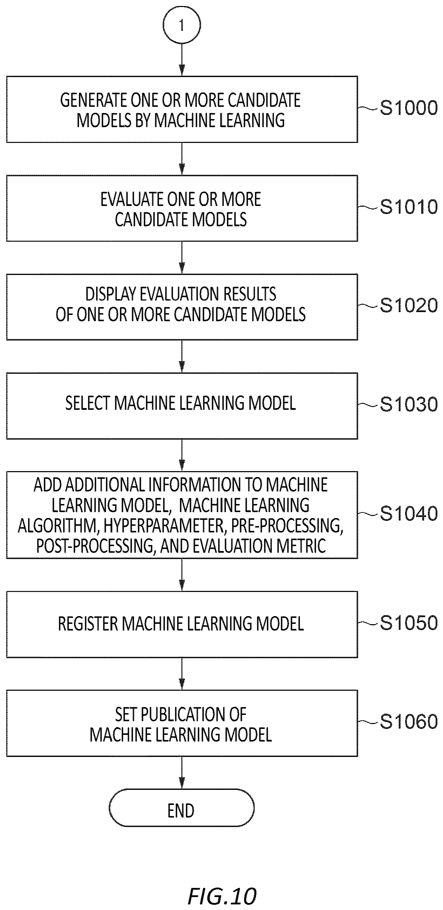

Fig. 9 illustrates a flow (first half) of generation of the machine learning model by the generation apparatus 100 according to the present embodiment. Fig. 10 illustrates a flow (second half) of the generation of the machine learning model by the generation apparatus 100 according to the present embodiment. As a type of the processing in S330 of Fig. 3, the generation apparatus 100 performs processing of generating the machine learning model 120 according to an instruction from the user.

In S900, the communication processing unit 225 in the generation apparatus 100 receives the training data used for training the machine learning model 120 and the evaluation data used for evaluating the machine learning model 120 to be generated, from the terminal apparatus 140 (for example, the terminal apparatus 140b, the terminal apparatus 140d). The communication processing unit 225 may receive, from the terminal apparatus 140, training data in a broad sense that is not divided into the training data (in a narrow sense) used for training the machine learning model 120 and the evaluation data used for evaluating the machine learning model 120. When, as in the generation flow of this figure, the generation apparatus 100 enables receiving upload of one or more sets of training data and evaluation data before receiving the generation request, the communication processing unit 225 may store the uploaded training data and evaluation data in the generation DB 215.

In S910, the communication processing unit 225 receives, from the terminal apparatus 140, the metadata regarding the machine learning model 120 generated using the training data received in S900. The communication processing unit 225 may perform display processing of causing the terminal apparatus 140 to display a screen for inputting metadata, and may receive, from the terminal apparatus 140, the metadata input on the screen by the user of the terminal apparatus 140. The communication processing unit 225 may receive, from the terminal apparatus 140, the metadata added to the training data in advance. When, as in the generation flow of this figure, the generation apparatus 100 can receive upload of one or more sets of training data and evaluation data before receiving the generation request, the communication processing unit 225 may store the metadata in the generation DB 215 in association with the uploaded training data and evaluation data.

In S915, the communication processing unit 225 receives a generation request for the machine learning model 120 from the terminal apparatus 140. The generation unit 230 receives the generation request from the communication processing unit 225. When the training data or the like is uploaded to the generation apparatus 100 in advance, the generation request may include a file name, a link, or other identification information for identifying the training data or the like designated by the user of the terminal apparatus 140.

In S920, the communication processing unit 225 confirms with the user via the terminal apparatus 140 whether there is a designation of at least one of the machine learning algorithm 110, the pre-processing, the post-processing, the hyperparameter, the evaluation metric, or the like to be used (whether or not there is a detailed designation). If there is no detailed designation ("NO" in S920), the generation unit 230 proceeds to S1000 (Fig. 10). If there is a detailed designation ("YES" in S920), the communication processing unit 225 receives, from the terminal apparatus 140, the designation of at least one of the machine learning algorithm 110, the pre-processing, the post-processing, the hyperparameter, the evaluation metric, or the like to be used.

In S1000, the generation unit 230 generates one or more candidate models that are candidates for the machine learning model 120 to be generated. Specifically, for each candidate model, the generation unit 230 generates an initial model of the candidate model, and generates the candidate model by training the initial model of the candidate model by using the training data associated with the generation request. As an example, the generation unit 230 may generate the initial model of each candidate model by the following method.

### (1) Reflection of designation by user or like

When, in S930 (Fig. 9), there is a designation of at least one of the machine learning algorithm 110, the pre-processing, the post-processing, the hyperparameter, or the like to be used, the generation unit 230 determines at least one of the machine learning algorithm 110, the pre-processing, the post-processing, the hyperparameter, or the like to be applied to the initial model according to the designation. Note that the generation unit 230 does not apply, to the generation of the candidate model in S1000, the machine learning algorithm 110, the pre-processing, the post-processing, or the hyperparameter that is not published to the user who made the generation request.

### (2) Reflection of metadata

When receiving a designation to perform search using the metadata associated with the machine learning model 120 generated by the generation request, user settings, setting of the generation apparatus 100, and the like, the generation unit 230 may determine at least one of the machine learning algorithm 110, the hyperparameter, the pre-processing on the input data, or the post-processing on the output data to be applied to the candidate model, based on the metadata added to the machine learning model 120 to be generated. In this case, the generation unit 230 may give priority to determination of (1) for the item determined in (1).

For example, the generation unit 230 may determine priority of adopting each machine learning algorithm 110 as a candidate model, based on a comparison result between the metadata added to the machine learning model 120 to be generated and the metadata of each machine learning algorithm 110 stored in the algorithm DB 500. The generation unit 230 may set the priority of the machine learning algorithm 110 to be higher as similarity between the metadata added to the machine learning model 120 to be generated and the metadata of the machine learning algorithm 110 is higher. The generation unit 230 may use the machine learning algorithm 110 as a candidate for generation of the machine learning model 120 on condition that the similarity between the metadata added to the machine learning model 120 to be generated and the metadata of the machine learning algorithm 110 is equal to or greater than a predetermined lower limit value.

Although the term "similarity" is used herein for convenience of description, the "similarity" may be "relatedness", "proximity", or any other metric value indicating how close two pieces of data are. In addition, instead of using the "similarity", the generation unit 230 may use a metric value such as a "dissimilarity" indicating how much two pieces of data are different from each other. In this case, when it is determined that the "dissimilarity" is lower, the generation unit 230 indirectly determines that the "similarity" is higher.

When the metadata includes a plurality of items, the generation unit 230 may calculate similarity between pieces of metadata based on similarity for each item. For example, the generation unit 230 may integrate the similarity for each item into the similarity between pieces of metadata by using a sum or a weighted sum of the similarity for each item, or another method.

Between the metadata added to the machine learning model 120 to be generated and the metadata of the machine learning algorithm 110, at least one of the plurality of items may be required to match. On condition that the content of such an item matches between the metadata added to the machine learning model 120 to be generated and the metadata of the machine learning algorithm 110, the generation unit 230 determines that the machine learning algorithm 110 can be adopted as the candidate model. For example, the generation unit 230 may cause the content (and format) of the input data and the content (and format) of the output data to match between the metadata added to the machine learning model 120 to be generated and the metadata of the machine learning algorithm 110.

When the metadata (or the content of the specific item of the metadata) added to the machine learning model 120 to be generated is included as at least a part of the metadata (or the content of the corresponding item of the metadata) of the machine learning algorithm 110, the generation unit 230 may calculate the similarity between pieces of metadata to be higher. For example, when the metadata of the machine learning algorithm 110 indicates that examples of use of the machine learning algorithm 110 are A, B, and C, and the metadata added to the machine learning model 120 to be generated indicates that an application of the machine learning model 120 is B, the generation unit 230 may calculate the similarity on a basis that pieces of metadata match regarding the application.

In the embodiment in which metadata (or content of a specific item of the metadata) is described in a natural language, the generation unit 230 may calculate the similarity between pieces of the metadata (or the content of the specific item) by using a method of calculating similarity between sentences expressed in the natural language. As an example, the generation unit 230 may generate a sentence vector indicating whether or not each word in a dictionary prepared in advance is included in the metadata, and use, as the similarity between pieces of the metadata, similarity (for example, an inner product) between a sentence vector generated from the metadata added to the machine learning model 120 and a sentence vector generated from the metadata of the machine learning algorithm 110.

The generation unit 230 may determine the priority also for the pre-processing and the post-processing in a similar manner to that described above. The generation unit 230 determines at least one of the machine learning algorithm 110, the pre-processing, or the post-processing to be adopted for the candidate model, based on the determined priority. For example, the generation unit 230 may select the machine learning algorithm 110 or the like with a higher probability as the priority is higher.

When there is a limitation on the pre-processing or the post-processing applicable to each machine learning algorithm 110, the generation unit 230 may select, based on the priority, the pre-processing or the post-processing to be adopted for the candidate model from among the pre-processing or the post-processing applicable to the selected machine learning algorithm 110. For example, in the embodiment in which it is necessary to match the content (and the format) of the output data of the pre-processing with the content (and the format) of the input data of the machine learning algorithm 110, the generation unit 230 selects a set of the machine learning algorithm 110 and the pre-processing so as to match the content (and the format) of the input data included in the metadata of the machine learning algorithm 110 with the content (and the format) of the output data included in the metadata of the pre-processing. The generation unit 230 may also select a set of the machine learning algorithm 110 and the post-processing in a similar manner.

When the machine learning algorithm 110 inputs a plurality of types of input data, the generation unit 230 may apply different pre-processing to each of the plurality of types of input data of the machine learning algorithm 110. In this case, the candidate model converts input data (one or more types of input data) to the candidate model, into a plurality of types of input data input by the machine learning algorithm 110 by using two or more types of pre-processing. Similarly, when the candidate model is to output a plurality of types of output data, the generation unit 230 converts output data (one or more types of output data) output by the machine learning algorithm 110, into a plurality of types of output data output by the candidate model by using two or more types of post-processing.

Note that the generation unit 230 may select two or more types of pre-processing, convert the input data to the candidate model in multiple stages by using these two or more pre-processing, and input the converted input data to the machine learning algorithm 110. Similarly, the generation unit 230 may select two or more types of post-processing, and convert the output data of the machine learning algorithm 110 in multiple stages by using these two or more post-processing, to be the output data of the candidate model.

The generation unit 230 may also select, in a similar manner, the hyperparameter used for the selected machine learning algorithm 110, pre-processing, or post-processing. In such an embodiment, the generation apparatus 100 may also add the metadata to the hyperparameter and store the hyperparameter in the generation DB 215. Here, the hyperparameter is a parameter that is determined before training the initial model and defines the configuration of the initial model and the like. For example, a neural network may have hyperparameters such as a number of at least layer, a number of at least node in each layer, or a learning coefficient. Since the hyperparameters are a parameter set unique to each of the machine learning algorithm 110, the pre-processing, and the post-processing, the generation unit 230 may select, from among a plurality of sets of hyperparameters, a set of hyperparameters corresponding to each of the machine learning algorithm 110, the pre-processing, or the post-processing which are selected.

By using the metadata, according to the input content (for example, a type of cell or the like) of the machine learning model 120 to be generated, the acquisition condition (for example, a product name of a microscope used for image capturing, or the like) of the input data, the application (differentiation detection of iPS cells, or the like), the output content (a determination result of presence or absence of a specific cell), or another required characteristic, the generation unit 230 can generate, as an example, a candidate model using the machine learning algorithm 110, the hyperparameter, the pre-processing, or the post-processing that is developed for the required characteristic or has been used for the required characteristic. Accordingly, the generation apparatus 100 can reduce an amount of computation and a computation time required to generate the machine learning model 120 as compared with a case where the machine learning model 120 is generated randomly or by brute force.

### (3) Random selection

When not receiving the designation to perform the search using the metadata associated with the machine learning model 120 generated by the generation request, the user setting, the setting of the generation apparatus 100, or the like, the generation unit 230 may determine, randomly or by brute force, at least one of the machine learning algorithm 110, the hyperparameter, the pre-processing on the input data, or the post-processing on the output data to be applied to the candidate model. Accordingly, the generation unit 230 increases the amount of computation and the computation time as compared with a case of using the metadata, but can generate the machine learning model 120 matching the purpose from among more various options.

The generation unit 230 may use grid search or random search in selecting the hyperparameter or another numerical value to be applied to the candidate model. In a case of using the grid search, the generation unit 230 performs an exhaustive search for all candidate models corresponding to grids arranged discretely (at regular intervals or the like) for each dimension in a search space (a subspace in a multidimensional space defined by a numerical range of each parameter value included in the hyperparameter) for searching a candidate model. In a case of using the random search, the generation unit 230 sets, as a selection target, a candidate model corresponding to a point randomly sampled from among the search space.

Note that, as for the generation of the candidate model exemplified above, when the machine learning algorithm 110 inputs a plurality of types of input data, the generation unit 230 may apply different pre-processing to each of the plurality of types of input data of the machine learning algorithm 110. In this case, the candidate model converts the input data (one or more types of input data) to the candidate model, into a plurality of types of input data input by the machine learning algorithm 110 by using two or more types of pre-processing. Similarly, when the candidate model is to output a plurality of types of output data, the generation unit 230 may apply the post-processing different for each of the plurality of types of output data of the candidate model, to the output data (one or more types of output data) output by the machine learning algorithm 110. In this case, the candidate model converts the output data (one or more types of output data) of the machine learning algorithm 110, into a plurality of types of output data output by the candidate model by using two or more types of post-processing.

Note that the generation unit 230 may select two or more types of pre-processing, convert the input data to the candidate model in multiple stages by using these two or more pre-processing, and input the converted input data to the machine learning algorithm 110. Similarly, the generation unit 230 may select two or more types of post-processing, and convert the output data of the machine learning algorithm 110 in multiple stages by using these two or more post-processing, to be the output data of the candidate model.

In S1010, the evaluation unit 235 evaluates each of one or more candidate models generated by the generation unit 230 by using the evaluation data. The evaluation unit 235 may quantitatively evaluate performance of each of the one or more candidate models by using the evaluation data. The evaluation unit 235 calculates, for each of sets of the input data and the output data included in the evaluation data, an error between the output data output by the candidate model when the input data included in the evaluation data is input to the candidate model and the output data included in the evaluation data (that is, target data or correct answer data), and calculates an evaluation metric value by using a sum or average of errors for the entire evaluation data, or the like.

The evaluation unit 235 may determine the evaluation metric to be used for evaluating one or more candidate models, based on the metadata added to the machine learning model 120 to be generated. Regarding S1000, similarly to the selection of the machine learning algorithm 110 which is based on the metadata by the communication processing unit 225 as described in (2) above, the evaluation unit 235 may select the evaluation metric based on the metadata added to the machine learning model 120 from among a plurality of evaluation metrics stored in the evaluation metric DB 800. Accordingly, the generation apparatus 100 can evaluate each candidate model by using an evaluation method suitable for the required characteristic of the machine learning model 120 to be generated. The evaluation unit 235 may calculate the evaluation metric value of each of two or more evaluation metrics for each candidate model.

The generation unit 230 and the evaluation unit 235 may divide the training data in a broad sense into the training data used for training the candidate model and the evaluation data used for evaluating the candidate model, by using cross-validation or hold-out validation.

The generation unit 230 and the evaluation unit 235 may repeatedly execute generation of the candidate model (S1000) and evaluation of the candidate model (S1010) by using Bayesian optimization, an evolutionary algorithm, a genetic algorithm, or the like. When the Bayesian optimization is performed, the generation unit 230 determines a configuration of a candidate model to be evaluated next and a hyperparameter, based on evaluation results of one or two or more candidate models generated in the past. When the evolutionary algorithm or the genetic algorithm is used, the generation unit 230 attempts to generate a candidate model having a higher evaluation value by repeating processing of generating one candidate model or two or more candidate models of the next generation from among one candidate model or two or more candidate models of the current generation by an operation such as crossover or mutation (S1000), and culling a candidate model having an evaluation value equal to or less than a threshold (S1010).

In S1020, the selection unit 240 performs processing of causing the terminal apparatus 140 via the communication processing unit 225 to display the evaluation results of one or more candidate models. As an example, the selection unit 240 may cause the terminal apparatus 140 to display the evaluation results of one or more candidate models in a ranking format or the like in which a candidate model having a higher evaluation is displayed higher. Note that, in another embodiment, the selection unit 240 may not perform processing of causing the terminal apparatus 140 to display the evaluation results of one or more candidate models.

In S1030, the selection unit 240 selects the machine learning model 120 to be provided in response to the generation request, by using the evaluation result by the evaluation unit 235 from among one or more candidate models. The selection unit 240 may select, as the machine learning model 120, one candidate model or a predetermined number of candidate models having a highest evaluation result from among one or more candidate models. When the processing of S1020 is performed, the selection unit 240 may select the machine learning model 120 to be provided in response to receiving selection by the user who has requested generation of the machine learning model 120. Accordingly, the selection unit 240 can guide the user to select a candidate model having a higher evaluation result, and make it possible to use the candidate model having the higher evaluation result as the machine learning model 120.

In S1040, the information addition unit 245 adds the additional information, which is based on the metadata accompanying the generation request, to at least one of the machine learning algorithm 110, the hyperparameter, the pre-processing on the input data, or the post-processing on the output data used for generating the machine learning model 120 in response to the generation request (that is, generating the machine learning model 120 selected by the selection unit 240). When the metadata associated with the generation request has data for each of a plurality of items, the information addition unit 245 may add the data for all items or some predetermined items of the plurality of items to the metadata of at least one of the machine learning algorithm 110, the hyperparameter, the pre-processing on the input data, or the post-processing on the output data used for generating the machine learning model 120.

In S1050, the model registration unit 250 registers the machine learning model 120 generated in response to the generation request and the accompanying metadata in the model DB 255. The model registration unit 250 may add, as a performance metric value indicating the performance of the machine learning model 120, the evaluation metric value calculated by the evaluation unit 235 for the generated machine learning model 120 to the metadata of the machine learning model 120. The model registration unit 250 may add generation date and time of the machine learning model 120, a version assigned by the user, or other information to the metadata.

In S1060, the model registration unit 250 sets whether or not to publish the generated machine learning model 120. When an instruction to make the generated machine learning model 120 public or private is included in the generation request, the model registration unit 250 sets the machine learning model 120 public or private according to the instruction.

The generation apparatus 100 described above can generate the machine learning model 120 according to the purpose of the user, by using the training data (and the evaluation data) received from the user. The generation apparatus 100 allows the machine learning model 120 generated or provided by the user to be made public to another user, thereby promoting use of the machine learning model 120 by another user. Accordingly, the generation apparatus 100 enables a plurality of users to share the machine learning model 120, instead of individual users separately training the machine learning models 120 using separate computers or the like. Accordingly, the generation apparatus 100 can reduce an amount of computation and power consumption required for separately training substantially identical or similar machine learning models 120.

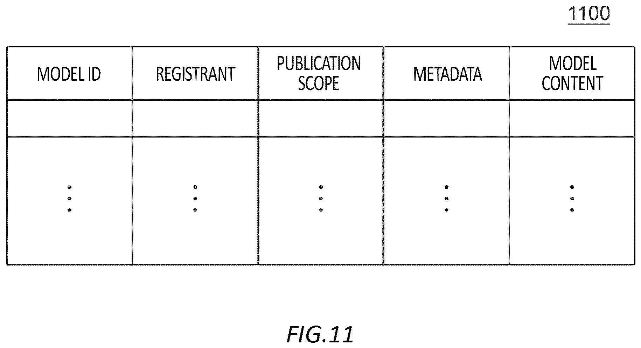

Fig. 11 illustrates an example of a model DB 1100 stored in the model DB 255 according to the present embodiment. The model DB 1100 stores "model ID", "registrant", "publication scope", "metadata", and "model content" for each of one or more machine learning models 120 registered in the generation apparatus 100.

The "model ID" is an identifier for identifying each machine learning model 120 in the system 10 or the generation apparatus 100. The model registration unit 250 may assign a unique identifier to each machine learning model 120. Alternatively, the model registration unit 250 may use, as the "model ID", a name or the like of the machine learning model 120 input by the user. The "registrant" is user identification information such as a user name (account name) or a user number (account number) for identifying the user who has registered the machine learning model 120. At least one machine learning model 120 may be provided by the platform provider of the system 10 or the account associated with the platform provider. The registration subsystem 200 may receive, from the terminal apparatus 140, the machine learning model 120 generated outside the generation apparatus 100 and register the machine learning model 120 in the model DB 1100.

The "publication scope" indicates a publication scope in which the machine learning model 120 is published. The model registration unit 250 sets the "publication scope" so as to publish the machine learning model 120 to a scope designated by the user who registers the machine learning model 120 (the user who has requested the generation of the machine learning model 120, or the like). The "publication scope" may be able to designate whether to enable use only of the user who has registered the machine learning model 120 or to publish the machine learning model 120 to another user. The "publication scope" is similar to the "publication scope" in Fig. 5 except that it relates to the machine learning model 120.

The "metadata" stores the metadata added to the machine learning model 120. The "model content" may store the content of the machine learning model 120 in a form of source code, object code, an executable format file, or another format. The "model content" may store a directory in which an entity of the machine learning model 120 is stored and a file name to the entity of the machine learning model 120, or a reference to the entity of the machine learning model 120, such as a link or a URL pointing to the entity of the machine learning model 120.

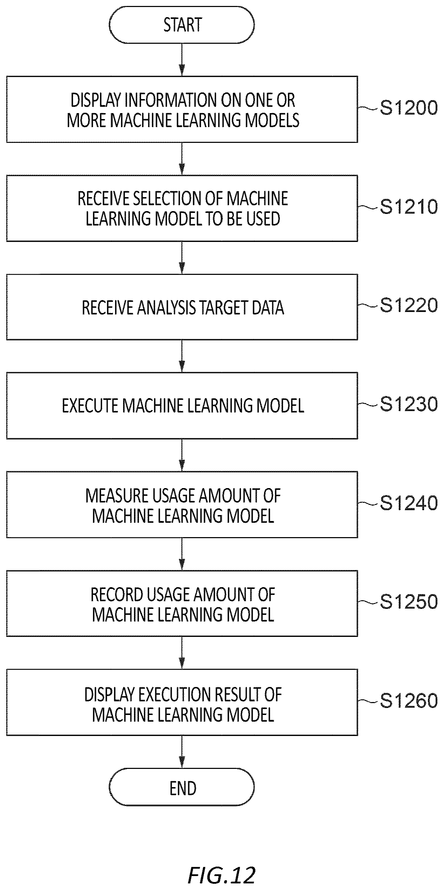

Fig. 12 illustrates a flow of use of the machine learning model by the generation apparatus 100 according to the present embodiment. As a type of the processing in S330 of Fig. 3, the generation apparatus 100 performs processing of allowing the user to use the machine learning model 120 in response to a use request from the user.

In S1200, in response to a request from the terminal apparatus 140 used by a user who intends to use the machine learning model 120, the communication processing unit 265 performs processing of causing the terminal apparatus 140 to display information on one or more machine learning models 120 registered in the model DB 255. The communication processing unit 265 may cause the terminal apparatus 140 to display at least one of the model ID, the registrant, the publication scope, or a part or a whole of the metadata of the machine learning model 120.

In response to a search request for the machine learning model 120 from the user, the communication processing unit 265 may search the model DB 255 for one machine learning model 120 or two or more machine learning models 120 that match a search condition, and causes the terminal apparatus 140 to display information on the retrieved machine learning model 120. The communication processing unit 265 may receive, as the search condition, a condition to be satisfied by the entire metadata or data for one or more specific items included in the metadata.

For example, when receiving a search request including a designation of an application for using the machine learning model 120, the communication processing unit 265 may search for the machine learning model 120 in which an application item in the metadata includes the designated application. When receiving a search request including a designation of the content and format of the input data and the output data of the machine learning model 120, the communication processing unit 265 may search for the machine learning model 120 in which items for the content and format of the input data and the content and format of the output data in the metadata match the designated content.

The communication processing unit 265 may receive a search request including a search condition described in a natural language. In this case, the communication processing unit 265 may calculate similarity of the metadata of each machine learning model 120 to the search condition by using a method of calculating sentence-to-sentence similarity between the search condition described in the natural language and the metadata of each machine learning model 120.

The communication processing unit 265 may cause the terminal apparatus 140 to display the information on one machine learning model 120 or two or more machine learning models 120 retrieved in response to the search request, with higher priority as a matching degree or the similarity of the metadata to the search condition is higher. For example, the communication processing unit 265 may cause the terminal apparatus 140 to display only information on a predetermined number (top ten or the like) of the machine learning models 120 having a high matching degree or similarity of the metadata to the search condition, or may cause the terminal apparatus 140 to display the information by using a ranking format or the like in which the machine learning model 120 having a higher matching degree or similarity of the metadata to the search condition is displayed higher.

The communication processing unit 265 may receive a search request including evaluation data used for evaluating the machine learning model 120 intended for search or use. In this case, similarly to the evaluation unit 235, the execution unit 270 evaluates each machine learning model 120 by using the evaluation data. The communication processing unit 265 may cause the terminal apparatus 140 to display the machine learning model 120 having a higher evaluation metric value with higher priority. For a search request including the search condition and the evaluation data, the communication processing unit 265 may determine the priority by combining the matching degree or similarity of the metadata to the search condition and the evaluation metric value. For example, the communication processing unit 265 may calculate the priority by a sum or a weighted sum of the matching degree or priority and the evaluation metric value, or the like.

In S1210, the communication processing unit 265 receives, from the terminal apparatus 140, selection of the machine learning model 120 to be used, which has been selected by the user in response to the display in S1200. In S1220, the communication processing unit 265 receives, from the terminal apparatus 140, analysis target data to be processed by the selected machine learning model 120. The analysis target data includes one or more sets of input data to be input to the machine learning model 120.

In S1230, the execution unit 270 inputs the analysis target data to the selected machine learning model 120 and executes processing of the machine learning model 120. The execution unit 270 inputs each of the one or more sets of input data included in the analysis target data to the machine learning model 120, and collects output data which is output by the machine learning model 120 in response to the input data.

As an example, a certain machine learning model 120 may predict biological data from a cell image. In this case, each input data included in the analysis target data is a cell image uploaded via the terminal apparatus 140 by the user using the machine learning model 120. The pre-processing included in the machine learning model 120 extracts a morphological features and/or texture information of a cell from the cell image. Such a morphological feature and/or texture information of a cell may be one parameter value or two or more parameter values that can be calculated from appearance of the cell, such as, for example, a size or circularity of the cell, or another cellular morphology or shape, brightness, hue, saturation, lightness, or other cellular color, or pattern, texture, visual texture, or other cellular markings.

The machine learning algorithm 110 included in the machine learning model 120 predicts, as an example, biological data such as a gene expression level or a protein expression level by using, as inputs, the morphological feature and/or texture information extracted by the pre-processing. Such a machine learning model 120 can predict biological data such as an expression level of a specific gene from a cell image.

In S1240, the measurement unit 275 measures a usage amount of the machine learning model 120 by the user. The measurement unit 275 may measure one or more types of usage amounts as exemplified below.

### (1) Number of uses or number of calls of machine learning model 120

The measurement unit 275 counts a number of at least one time the machine learning model 120 has been used or a number of at least one time the machine learning model 120 has been called in response to a use request, and sets the counted number as the usage amount.

### (2) Execution time of machine learning model 120

The measurement unit 275 measures an execution time during which the machine learning model 120 is executed in response to the use request, and uses the measured execution time as the usage amount.

### (3) Data volume or data scale of analysis target data

The measurement unit 275 acquires a data volume (such as a number of pieces of input data) or a data scale (such as input data size × number of pieces of input data) of the analysis target data associated with the use request, and uses it as the usage amount.

### (4) Amount of computation or number of instructions of machine learning model 120

The measurement unit 275 uses a performance counter or another performance monitoring function included in a processor or the like that executes the machine learning model 120 to count an amount of computation (such as a number of floating-point operations), a number of instructions, or the like of the machine learning model 120 executed in response to the use request, and uses it as the usage amount.

In S1250, the measurement unit 275 records, in the history DB 290, the usage amount of the machine learning model 120 by the user who has made the use request. The measurement unit 275 may record, in the history DB 290, an execution history including the user who has used the machine learning model 120, the model ID of the machine learning model 120 that has been used, use date and time, the usage amount, and the like.

The history DB 290 may be implemented by a distributed ledger using a blockchain technology. In this case, the measurement unit 275 records, in the history DB 290 implemented using blockchain, the usage amount of the machine learning model 120 by each user. Accordingly, the history DB 290 can secure transparency and reliability of execution history data, and can publish the execution history of the machine learning model 120 to a creator, a user, and the like of the machine learning model 120 while preventing tampering.

In S1260, the communication processing unit 265 performs processing of causing the terminal apparatus 140 used by the user who has made the use request to display the execution result of the machine learning model 120 by the execution unit 270. The communication processing unit 265 may generate a display screen of the analysis result by the machine learning model 120, by using a visualization tool (for example, display of a heat map, a graph, and a statistical metric) and cause the terminal apparatus 140 to display the display screen. The communication processing unit 265 may export the analysis result to the terminal apparatus 140 as a file such as PDF or CSV according to the user's operation. In addition, the communication processing unit 265 may output the analysis result in a report format.

As an example, the communication processing unit 265 may output an evaluation result as the analysis result to the terminal apparatus 140, the evaluation result being obtained by non-invasively evaluating a health state or differentiation state of the cell during culture from the cell image by using the machine learning model 120. As another example, the communication processing unit 265 may output an evaluation result as the analysis result to the terminal apparatus 140, the evaluation result being obtained by predicting a change in gene expression and evaluating drug efficacy from the cell image after drug addition by using the machine learning model 120. As another example, the communication processing unit 265 may analyze a large number of cell images as the analysis result and output an evaluation result of detecting a defective cell to the terminal apparatus 140. The communication processing unit 265 may output, to the terminal apparatus 140, an analysis result by the machine learning model 120 applied to any other application in response to a request of the user.

The communication processing unit 265 may receive a user evaluation for the machine learning model 120 from the terminal apparatus 140 of the user who has received the analysis result. The model DB 255 may store the user evaluation for the machine learning model 120 as the metadata of the machine learning model 120. In response to receiving the user evaluation for the machine learning model 120, the communication processing unit 265 may update the user evaluation included in the metadata of the machine learning model 120 stored in the model DB 255. For example, the communication processing unit 265 may update an average value of the user evaluation included in the metadata by using the average value of the user evaluation and a number of at least one evaluator included in the metadata, and a newly received user evaluation.

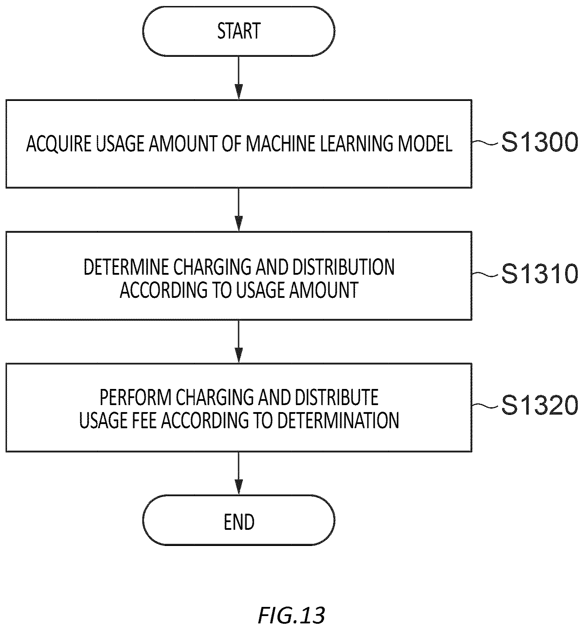

Fig. 13 illustrates a flow of distribution of the generation apparatus 100 according to the present embodiment. The generation apparatus 100 may execute the distribution flow of this figure every predetermined period or the like (for example, every month) and pay a usage fee to a provider of the machine learning algorithm 110 or the machine learning model 120.

In S1300, the distribution unit 280 searches an execution history of each machine learning model 120 in a target period, and acquires a usage amount of each machine learning model 120 in the target period. Regarding charging, the distribution unit 280 may calculate, for each user, a total usage amount by the user from the execution history of one machine learning model or two or more machine learning models 120 executed by each user in the target period. When a charging policy is adopted in which, when a user himself/herself who has generated or provided the machine learning model 120 uses that machine learning model 120, the usage fee for the machine learning model 120 is not charged, for each user, the distribution unit 280 may calculate the total usage amount by the user from the execution history of the machine learning model 120 generated or provided by another user in the target period. When a charging policy is adopted in which, when the user himself/herself who has generated or provided the machine learning model 120 uses that machine learning model 120, the usage fee for the machine learning model 120 is discounted, for each user, the distribution unit 280 may multiply the usage amount of the machine learning model 120 generated or provided by the user in the target period by a discount coefficient (a value larger than 0 and smaller than 1) and reflect the result on the total usage amount by the user.

Regarding the distribution of the usage fee, the distribution unit 280 may calculate, for each machine learning model 120, a total usage amount of the machine learning model 120 from all execution histories of the machine learning model 120 in the target period. When a distribution policy is adopted in which, when the user himself/herself who has generated or provided the machine learning model 120 uses that machine learning model 120, the usage fee for the machine learning model 120 is not distributed, the distribution unit 280 may calculate, for each machine learning model 120, the total usage amount from the execution history of the machine learning model 120 by those other than the creator or the provider of the machine learning model 120 in the target period. When a distribution policy is adopted in which, when the user himself/herself who has generated or provided the machine learning model 120 uses that machine learning model 120, the usage fee for the machine learning model 120 is discounted and distributed, for each machine learning model 120, the distribution unit 280 may multiply the usage amount of the machine learning model 120 by the creator or the provider of the machine learning model 120 in the target period by a discount coefficient (a value larger than 0 and smaller than 1) and reflect the result on the total usage amount.

In S1310, the distribution unit 280 determines a charge amount for each user and a usage fee to be distributed to the creator or the provider of each machine learning model 120, according to the usage amount of each machine learning model 120 in the target period. As an example, the distribution unit 280 may use a charging policy based on any one or combination (sum or weighted sum) below.

### (A1) Flat-rate system

The distribution unit 280 may determine to charge each user a flat-rate usage fee for each predetermined period or the like.

### (A2) Metered system

The distribution unit 280 determines the charge amount of the usage fee for each user according to a total usage amount of all machine learning models 120 by the user. The distribution unit 280 may determine the charge amount proportional to the usage amount, or may determine the charge amount in stages according to the usage amount.

### (A3) Charging reflecting evaluation metric value or model accuracy of machine learning model 120

The distribution unit 280 determines the charge amount of the usage fee for each user in consideration of the evaluation metric value of each machine learning model 120 in addition to the total usage amount of the machine learning models 120 by the user. As an example, the distribution unit 280 may set an amount, which is obtained by multiplying the usage amount of each machine learning model 120 by the evaluation metric value of that machine learning model 120, as the charge amount charged to the user for the use of that machine learning model 120.

### (A4) Charging reflecting user evaluation of machine learning model 120

The distribution unit 280 determines the charge amount of the usage fee for each user in consideration of the user evaluation of each machine learning model 120 in addition to the total usage amount of the machine learning models 120 by the user. As an example, the distribution unit 280 may set an amount, which is obtained by multiplying the usage amount of each machine learning model 120 by the user evaluation of the machine learning model 120, as the charge amount charged to the user for the use of the machine learning model 120.

### (A5) Charging reflecting number of unique users of machine learning model 120

The distribution unit 280 determines the charge amount of the usage fee for each user in consideration of a number of at least one unique user of each machine learning model 120 in the target period or a longer period in addition to the total usage amount of the machine learning models 120 by the user. As an example, the distribution unit 280 may set an amount, which is obtained by multiplying the usage amount of each machine learning model 120 by the number of at least one unique user of the machine learning model 120 (or a coefficient or the like that gradually increases as the number of at least one unique user increases), as the charge amount charged to the user for the use of the machine learning model 120.

### (A6) Charging according to outcome-based compensation

The distribution unit 280 may apply charges when the user achieves a certain research outcome or business outcome by using an analysis result obtained by using the machine learning model 120. The distribution unit 280 may generate a charge amount according to satisfaction of an achievement condition, such as discovering a new drug candidate, publishing a paper in an academic journal, or the like. The communication processing unit 285 receives, from the terminal apparatus 140, an outcome achievement condition and a charge amount corresponding to the achievement for the machine learning model 120 intended for use. The distribution unit 280 communicates with one terminal apparatus 140 or two or more terminal apparatuses 140 used by an involved party (at least one of the creator or the provider of the machine learning model 120, a creator or a provider of the machine learning algorithm 110 used by the machine learning model 120, or a provider of the generation apparatus 100) who receives the usage fee of the machine learning model 120, and receives, from each involved party, an agreement on the outcome achievement condition and the charge amount. When the agreement is established, the communication processing unit 265 receives a use request from a user who intends to use the machine learning model 120.

The distribution unit 280 may set, on the history DB 290 or another blockchain, a smart contract indicating that the user pays the charge amount to the involved party in response to satisfaction of the outcome achievement condition. Here, a distribution ratio of the usage fees received by each involved party may be determined in advance by initial settings or the like of the generation apparatus 100, or may be determined by discussion among involved parties.

As an example, the distribution unit 280 may use a distribution policy based on any one or combination (sum or weighted sum) below.

### (B1) Flat-rate system

The distribution unit 280 may determine payment of a flat-rate usage fee to the user who has generated or provided each machine learning model 120 (and the user who has generated or provided the machine learning algorithm 110 used in that machine learning model 120. The same applies hereinafter) for each predetermined period or the like.

### (B2) Metered system

The distribution unit 280 determines a payment amount of the usage fee for each machine learning model 120 similarly to A2 above, according to the total usage amount of the machine learning model 120.

### (B3) Distribution reflecting evaluation metric value or model accuracy of machine learning model 120

In consideration of the evaluation metric value of each machine learning model 120 in addition to the total usage amount of the machine learning models 120, the distribution unit 280 determines the payment amount of the usage fee for that machine learning model 120 similarly to A3 above.

### (B4) Distribution reflecting user evaluation of machine learning model 120

In consideration of the user evaluation of each machine learning model 120 in addition to the total usage amount of each machine learning model 120, the distribution unit 280 determines the payment amount of the usage fee for that machine learning model 120 similarly to A4 above.

### (B5) Distribution reflecting number of unique users of machine learning model 120

In consideration of the number of at least one unique user of the machine learning model 120 in the target period or the longer period in addition to the total usage amount of each machine learning model 120, the distribution unit 280 determines a distribution amount of the usage fee for the machine learning model 120 similarly to A5 above.

### (B6) Distribution according to outcome-based compensation

When a contract is established which indicates that a charge amount is paid in response to satisfaction of the outcome achievement condition according to A6 above, in response to satisfaction of the achievement condition, the distribution unit 280 may receive a notification, which indicates that the outcome has been achieved, via the communication processing unit 285 from the terminal apparatus 140 or the like of the user having used the machine learning model 120. In response to receiving the notification, the distribution unit 280 sets a distribution amount of the usage fee for each involved party who is to receive the usage fee of the machine learning model 120.

Depending on a type of the achievement condition, the distribution unit 280 may determine whether or not the outcome achievement condition is satisfied, by monitoring a specific URL or the like on the Internet. For example, the distribution unit 280 may determine whether or not the achievement condition of "publishing a paper in a specific academic journal" is satisfied, based on whether or not a paper including a title, a keyword, or the like designated by the user is listed with the user's name or company name on a website related to the specific academic journal or a page linked from the website, and the like. In response to determining that the outcome achievement condition is satisfied, the distribution unit 280 sets the distribution amount of the usage fee for each involved party which is to receive the usage fee of the machine learning model 120.

When the payment of the outcome-based compensation is set by the smart contract, the distribution unit 280 or an apparatus of each node storing a distributed ledger may determine the distribution amount of the usage fee for each involved party who is to receive the usage fee of the machine learning model 120, similarly to the above, in response to determining that the outcome achievement condition is satisfied and perform payment processing in S1320 described later.

Note that the generation apparatus 100 may use a set of a same type of charging policy and distribution policy among the charging policies (A1 to A6) and the distribution policies (B1 to B6) described above. For example, the generation apparatus 100 may adopt A3 as the charging policy and may adopt B3 of a same type as A3 as the distribution policy. Alternatively, the generation apparatus 100 may use a set of a charging policy and a distribution policy which are of different types, among the charging policies (A1 to A6) and the distribution policies (B1 to B6) described above. For example, the generation apparatus 100 may adopt A1 as the charging policy and use B2 as the distribution policy.

In S1320, the distribution unit 280 communicates with each terminal apparatus 140 via the communication processing unit 285, and performs charging processing and payment processing (transfer processing) of the usage fee determined in S1310. The distribution unit 280 may perform charging or transfer by transmitting a charging or transfer transaction for the usage amount via the communication processing unit 285 to a server apparatus or the like of a financial institution, a credit card company, or the like used by a charging target person or a payment target person.

According to the generation apparatus 100 described above, by paying the usage fee of the machine learning model 120 to the creator or the provider of the machine learning model 120, it is possible to promote generation of the machine learning model 120 using the generation apparatus 100, provision of the machine learning model 120 to the generation apparatus 100, publication of the machine learning model 120 to another user, or the like. Although a large amount of computation is required for training the machine learning model 120 and power consumption also increases, the generation apparatus 100 facilitates a plurality of users to share the trained machine learning model 120, whereby it is possible to reduce waste of an amount of computation and power consumption required for separately training substantially identical or similar machine learning models 120.

Note that the generation apparatus 100 may perform charging processing for the generation of the machine learning model 120, including training or the like of the machine learning algorithm 110 required in association with the generation of the machine learning model 120, for the user who has made the generation request. In addition, for the user who has provided the training data or the evaluation data for generating or evaluating the machine learning model 120, the generation apparatus 100 may perform payment processing of paying consideration for the provision.

A platform provider, who manages the generation apparatus 100, may issue a platform-specific token or point. Here, the "token" may be a crypto asset where ownership and the amount held are managed by a distributed ledger using a blockchain technology. The "point" may be an asset that can be used in place of actual cash or the like for which the platform provider centrally manages issuance, transfer (assignment, delivery, or the like), and the like. The "point" may be tokenized and managed by a distributed ledger. The generation apparatus 100 may implement some or all of various types of charging or payments that occur with use of the generation apparatus 100, by granting or receiving a token or a point. In addition, the generation apparatus 100 may receive staking (deposit) of tokens or points from among each user, and may distribute an additional bonus of the usage fee, from among the usage fee of the machine learning model 120 paid by each user, to the user who has generated or provided that machine learning model 120 according to an amount of tokens or points staked by that user. The generation apparatus 100 or platform provider may cash out tokens or points at a certain multiplier or rate and pay them to the user in response to a request from the user.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer readable instructions stored on computer readable media, and/or processors supplied together with computer readable instructions stored on computer readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations specified in the flowcharts or block diagrams. Examples of the computer readable medium may include an electronic storage medium, a magnetic storage medium, an optical storage medium, an electromagnetic storage medium, a semiconductor storage medium, or the like. More specific examples of the computer readable medium may include a FLOPPY (registered trademark) disk, a diskette, a hard disk, a random access memory (RAM), a read only memory (ROM), an erasable programmable read only memory (EPROM or a flash memory), an electrically erasable programmable read only memory (EEPROM), a static random access memory (SRAM), a compact disc read only memory (CD-ROM), a digital versatile disk (DVD), a BLU-RAY (registered trademark) disk, a memory stick, an integrated circuit card, and the like.

A computer readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as SMALLTALK (registered trademark), JAVA (registered trademark), C++, or the like, and a conventional procedural programming language such as a "C" programming language or a similar programming language.

The computer readable instruction may be provided for a processor or programmable circuit of a programmable data processing apparatus, such as a computer, locally or via a local area network (LAN), a wide area network (WAN) such as the Internet, or the like to execute the computer readable instruction in order to create means for executing the operations specified in the flowcharts or block diagrams. Here, the computer may be a personal computer, or PC, a tablet computer, a smartphone, a workstation, a server computer, a general-purpose computer, a special-purpose computer, or the like, or may be a computer system to which a plurality of computers are connected. Such computer system in which the plurality of computers are connected to each other is also called a distributed computing system, and is a computer in a broad sense. In the distributed computing system, the plurality of computers collectively execute the program by each of the plurality of computers executing a part of the program, and passing data during the execution of the program among the computers as needed.

Examples of the processor include a computer processor, a central processing unit (CPU), a processing unit, a microprocessor, a digital signal processor, a controller, a microcontroller, or the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processors is responsible for executing may be determined statically by multiprocessor-aware programming.

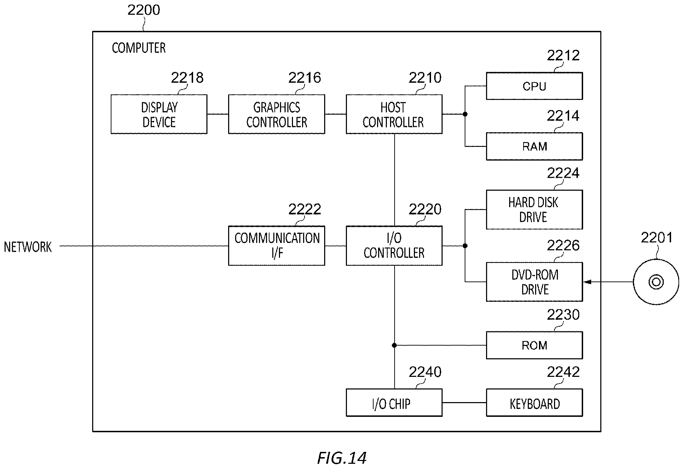

Fig. 14 illustrates an example of a computer 2200 in which a plurality of aspects of the present invention may be embodied in whole or in part. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a step of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, a RAM 2214, a graphics controller 2216, and a display device 2218, which are interconnected by a host controller 2210. The computer 2200 also includes a communication interface 2222, a storage apparatus such as a hard disk drive 2224, and input/output units such as a DVD-ROM drive 2226 and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The storage apparatus such as the hard disk drive 2224 stores programs and data to be used by the CPU 2212 in the computer 2200. The DVD-ROM drive 2226 reads programs or data from a DVD-ROM 2201 and provides the programs or data to the storage apparatus such as the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

Programs are provided by a computer readable medium such as the DVD-ROM 2201 or the IC card. The programs are read from the computer readable medium, installed on the storage apparatus such as the hard disk drive 2224, the RAM 2214 or the ROM 2230, which are also examples of the computer readable medium, and executed by the CPU 2212. The information processing described in these programs is read by the computer 2200, and provides cooperation between the programs and the various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing based on a processing written in the communication program. The communication interface 2222 reads transmission data stored in a transmission buffer processing region provided on the RAM 2214, the storage apparatus such as the hard disk drive 2224, the DVD-ROM 2201, or a recording medium such as an IC card under the control of the CPU 2212, transmits the read transmission data to the network, or writes reception data received from the network to a reception buffer processing region or the like provided on a recording medium.

In addition, the CPU 2212 may cause the RAM 2214 to read all or a necessary part of a file or database stored in the storage apparatus such as the hard disk drive 2224, the DVD-ROM drive 2226 (DVD-ROM 2201), or an external recording medium such as an IC card, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer readable medium on or near the computer 2200. In addition, a recording medium such as a hard disk or a RAM provided in a server system connected to a dedicated communication network or the Internet can be used as a computer readable medium, thereby providing a program to the computer 2200 via the network.

While the present invention has been described hereinabove by using the embodiment, a technical scope of the present invention is not limited to a scope of the above-described embodiment. It is apparent to persons skilled in the art that various changes or improvements may be made to the embodiment described above. It is also apparent from the scope of the claims that the embodiments added with such changes or improvements can be included in the technical scope of the invention.

It should be noted that each process of the operations, procedures, steps, stages, and the like performed by the device, system, program, and method shown in the claims, specification, and drawings may be executed in any order as long as the order is not particularly explicitly indicated by "before", "prior to", or the like and as long as an output from a previous process is not used in a later process. Even if the operation flow is described using phrases such as "first" or "next" in the claims, the description, and the drawings, it does not necessarily mean that it must be performed in this order.

### EXPLANATION OF REFERENCES

10: system; 100: generation apparatus; 110: machine learning algorithm; 120a to 120b: machine learning model; 140a to 140e: terminal apparatus; 200: registration subsystem; 205: communication processing unit; 210: registration unit; 215: generation DB; 220: generation subsystem; 225: communication processing unit; 230: generation unit; 235: evaluation unit; 240: selection unit; 245: information addition unit; 250: model registration unit; 255: model DB; 260: use subsystem; 265: communication processing unit; 270: execution unit; 275: measurement unit; 280: distribution unit; 285: communication processing unit; 290: history DB; 500: algorithm DB; 600: pre-processing DB; 700: post-processing DB; 800: evaluation metric DB; 1100: model DB; 2200: computer; 2201: DVD-ROM; 2210: host controller; 2212: CPU; 2214: RAM; 2216: graphics controller; 2218: display device; 2220: input/output controller; 2222: communication interface; 2224: hard disk drive; 2226: DVD-ROM drive; 2230: ROM; 2240: input/output chip; and 2242: keyboard.

## Claims

1. A generation apparatus comprising:
a processor; and
a computer readable medium which stores a program, wherein
the processor executes the program to perform:
receiving evaluation data to be used for evaluating a machine learning model to be generated;
generating one or more candidate models that are candidates for a machine learning model to be generated;
evaluating each of the one or more candidate models by using the evaluation data; and
providing a machine learning model selected from among the one or more candidate models by using an evaluation result.

2. The generation apparatus according to claim 1, wherein
the processor executes the program to perform:
receiving training data to be used for training a machine learning model to be generated; and
generating, in the generating the one or more candidate models, each of the one or more candidate models by training by using the training data.

3. The generation apparatus according to claim 1 or 2, wherein
the processor executes the program to
generate, in the generating the one or more candidate models, the one or more candidate models which are different from each other in at least one of a machine learning algorithm, a hyperparameter, pre-processing on input data, or post-processing on output data.

4. The generation apparatus according to claim 3, wherein when there is a designation by a user for at least one of a machine learning algorithm, a hyperparameter, pre-processing on input data, or post-processing on output data, the processor executes the program to determine, in the generating the one or more candidate models, at least one of a machine learning algorithm, a hyperparameter, pre-processing on input data, or post-processing on output data to be applied to the one or more candidate models, according to the designation by the user.

5. The generation apparatus according to claim 3 or 4, wherein
the processor executes the program to perform:
receiving metadata indicating at least one of a content, a format, or an acquisition condition of input data, or a content or a format of output data, regarding a machine learning model to be generated; and
in generating at least one candidate model of the one or more candidate models, determining, based on the metadata, at least one of a machine learning algorithm, a hyperparameter, pre-processing on input data, or post-processing on output data to be applied to a candidate model.

6. The generation apparatus according to claim 5, wherein
the processor executes the program to perform:
adding additional information, which is based on the metadata, to at least one of a machine learning algorithm, a hyperparameter, pre-processing on input data, or post-processing on output data used for generating the machine learning model; and
determining, in generating at least one candidate model for generation of a new machine learning model, at least one of a machine learning algorithm, a hyperparameter, pre-processing on input data, or post-processing on output data to be applied to a candidate model, based on a comparison result between the metadata and additional information added to at least one of a machine learning algorithm, a hyperparameter, pre-processing on input data, or post-processing on output data.

7. The generation apparatus according to claim 5 or 6, wherein
the processor executes the program to perform
determining, based on the metadata, an evaluation metric to be used for evaluating the one or more candidate models.

8. The generation apparatus according to any one of claims 1 to 7, wherein
the processor executes the program to perform
charging processing for generation of the machine learning model.

9. The generation apparatus according to any one of claims 1 to 8, wherein
the processor executes the program to perform
allowing a second user to use a machine learning model, which has been generated in response to a request from a first user, in response to a request from the second user.

10. The generation apparatus according to claim 9, wherein
the processor executes the program to perform
measuring a usage amount of the machine learning model by the second user.

11. The generation apparatus according to claim 10, wherein
the processor executes the program to perform
recording, in a blockchain, the usage amount of the machine learning model by the second user.

12. The generation apparatus according to claim 10 or 11, wherein
the processor executes the program to perform
processing of charging a usage fee to the second user according to the usage amount of the machine learning model by the second user.

13. The generation apparatus according to any one of claims 10 to 12, wherein
the processor executes the program to perform
processing of paying a usage fee to the first user according to the usage amount of the machine learning model by the second user.

14. A generation method comprising:
receiving, by a computer, evaluation data to be used for evaluating a machine learning model to be generated;
generating, by the computer, one or more candidate models that are candidates for a machine learning model to be generated;
evaluating, by the computer, each of the one or more candidate models by using the evaluation data; and
providing, by the computer, a machine learning model selected from among the one or more candidate models by using an evaluation result.

15. A generation program which, when executed by a computer, causes the computer to perform operations comprising:
receiving evaluation data to be used for evaluating a machine learning model to be generated;
generating one or more candidate models that are candidates for a machine learning model to be generated;
evaluating each of the one or more candidate models by using the evaluation data; and
providing a machine learning model selected from among the one or more candidate models by using an evaluation result.
